(19) Europäisches Patentamt
European Patent Office
Office européen des brevets

(11) **EP 4 498 128 A2**

(12) **EUROPÄISCHE PATENTANMELDUNG**

(43) Veröffentlichungstag:
**29.01.2025  Patentblatt 2025/05**

(21) Anmeldenummer: **24184012.3**

(22) Anmeldetag: **24.06.2024**

(51) Internationale Patentklassifikation (IPC):
**G01S 19/14** (2010.01)   **G01S 19/22** (2010.01)
**G01S 19/35** (2010.01)   **G01S 19/36** (2010.01)
**G01S 19/37** (2010.01)

(52) Gemeinsame Patentklassifikation (CPC):
**G01S 19/22; G01S 19/14; G01S 19/35;**
**G01S 19/36; G01S 19/37**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität:  **06.07.2023  DE 102023002777**

(71) Anmelder: **Fuba Automotive Electronics GmbH
31162 Bad Salzdetfurth (DE)**

(72) Erfinder:
• **Lindenmeier, Stefan
  82131 Gauting (DE)**
• **Lindenmeier, Heinz
  82152 Planegg (DE)**

(74) Vertreter: **Manitz Finsterwald
Patent- und Rechtsanwaltspartnerschaft mbB
Martin-Greif-Strasse 1
80336 München (DE)**

(54) **SATELLITENNAVIGATIONS-EMPFANGSANLAGE**

(57)    Eine    Satellitennavigations-Empfangsanlage
zum mobilen Empfang von Ortungssatelliten-Signalen
ist offenbart, die bei teilweise unterbrochener Sichtlinie
zwischen einem Fahrzeug und mehreren Satelliten, also
insbesondere in urbanen oder bewaldeten oder gebirgigen Gebieten, das Signal-Störverhältnis und damit das
Navigationsergebnis verbessert

Fig: 1

**Beschreibung**

Die Erfindung betrifft eine Satellitennavigations-Empfangsanlage zum mobilen Empfang der von GNSS-Ortungssatelliten ausgestrahlten Signalen umfassend eine GNSS-Satellitensignal-Empfangseinheit zum Empfang der auf einer in der Phase digital modulierten HF-Trägerschwingung von verschiedenen GNSS-Ortungs-Satelliten auf derselben Träger-Frequenz überlagert ausgestrahlten CDMA-codierten GNSS-Satelliten-Signalen. Im L1-Band des GPS-Systems beträgt die Träger-Frequenz z. B. fo = 1,57542 GHz.

Insbesondere bei Satelliten-Navigationssystemen kommt es besonders auf die Wirtschaftlichkeit sowohl bezüglich der vom Satelliten abgestrahlten Sendeleistung als auch auf die Effizienz der Satelliten-Empfangsantenne an. GNSS-Satelliten-Signale $5_1, 5_2, 5_3, ...$ werden aufgrund von Polarisationsdrehungen auf dem Übertragungsweg in der Regel mit zirkular polarisierten elektromagnetischen Wellen übertragen und werden für alle bekannten Satelliten-Navigationssysteme angewandt. Moderne Navigationssysteme sehen insbesondere für die globale Erreichbarkeit in Verbindung mit einer hohen Navigationsgenauigkeit bei der mobilen Navigation vor, die gleichzeitig empfangenen Funksignale mehrerer Satelliten-Navigationssysteme auszuwerten. Solche im Verbund empfangenden Systeme sind unter dem Begriff GNSS Global Navigation Satellite System zusammengefasst und beinhalten bekannte Systeme, wie zum Beispiel GPS, GLONASS, Galileo und Beidou, etc. Satellitenantennen für die Navigation auf Fahrzeugen und werden in der Regel auf der elektrisch leitenden Außenhaut der Fahrzeugkarosserie aufgebaut. Es kommen zirkular polarisierte Satelliten-Empfangsantennen zur Anwendung, wie sie zum Beispiel aus den Druckschriften DE-A-10 2009 040 910, DE-A-40 08 505 und DE-A-101 63 793 bekannt sind. Für den Aufbau auf Fahrzeugen eignen sich besonders solche Antennen, welche sich durch eine niedrige Bauhöhe in Verbindung mit kostengünstiger Herstellbarkeit auszeichnen. Hierzu zählt zum Beispiel die aus der Druckschrift DE-A-10 2009 040 910 bekannte, als Resonanzstruktur gestaltete kreisförmige, polygonförmige oder quadratische Ringleitungsantenne mit kleinem Bauvolumen, welches insbesondere für mobile Anwendungen vorteilhaft ist. Die Antenne weist eine notwendige leitende Grundfläche von verhältnismäßig geringer Größe auf und ist mit einer Höhe von weniger als einem Zehntel der Freiraumwellenlänge sehr niedrig. Als weitere Antennen für die Satelliten-Navigation auf Fahrzeugen sind aus dem Stand der Technik Patch-Antennen bekannt, welche jedoch bezüglich des Empfangs unter niedrigem Elevationswinkel weniger leistungsfähig sind.

Antennen für den Empfang von Navigationssatelliten-Signalen sind In Abstimmung auf die von den Satelliten abgestrahlten Signale rechtshändig zirkular polarisiert (RHCP). Im Normalfall wird die Antenne über eine Hochfrequenzleitung an den Hochfrequenzeingang eines Empfängers zum mobilen Empfang von Ortungssatelliten-Signalen angeschlossen. Beim mobilen Empfang befinden sich die Pegel der Empfangssignale einzelner Satelliten deutlich unter dem Pegel des stochastischen Rauschens, weshalb die Auswertung der Empfangssignale über Korrelationstechnologien (CDMA, Code-Division-Multiple-Access;) erfolgt. Beispielhafte Werte für das L1-Band des GPS-Systems und dem dort verwendeten CDMA-Code als Sonderform eines CDMA-Codes sind 1us für die Chip-Länge und ca. 1ms für die Zykluslänge eines CDMA-Code-Blocks - bestehend aus 1023 Chips.

Im Empfänger kann eine Vielzahl von Korrelatoren vorhanden sein, wobei jeder Korrelator einem Ortungssatelliten zugeordnet ist. Ist das Signal eines Satelliten über einen Korrelator im verrauschten Signal erkannt, so kann dieses Signal während der Bewegung des Fahrzeugs sehr sicher verfolgt werden, wobei es einer beträchtlichen Störung des Strahlungsweges bedarf, um das Signal zu verlieren.

Das Erkennen der einzelnen digital modulierten Satellitensignale im verrauschten Empfangssignal kann dadurch erfolgen, dass mit dem jeweils zugeordneten CDMA-Code-Signal-Korrelator durch Synchronisierung das Autokorrelationsmaximum gefunden wird. Das heißt, dass das jedem Satelliten zugeordnete CDMA-Code-Signal mit dem Empfangssignal korreliert wird, indem zwischen den Codesignalen und dem Empfangssignal jeweils eine variable Zeitverzögerung um die Laufzeit $\tau_1, \tau_2, \tau_3,..$ in einem Durchlauf realisiert wird, bis jeweils eine Synchronität zwischen dem im Empfangssignal empfangenen Satellitencode und dem im Empfänger erzeugten CDMA-Code-Signal besteht.

Dabei entsteht in der jeweiligen Korrelationsfunktion $Kt_1, Kt_2, Kt_{3,...}$ ein Korrelationssignal-Maximalwert $34a_1, ...,$ $34b_2, ...$ und die dafür notwendigen idealen Zeitverzögerungen $\tau_1 = \tau_1 opt, \tau_2 = \tau_2 opt, \tau_3 = \tau_3 opt,..$ sind ermittelt. Nach dem Finden der Signale kann auf dieser Basis eine Ortung per Triangulation durchgeführt werden, wenn mindestens vier Signale erfasst wurden. Das vierte Signal ist zur Definition einer gemeinsamen Zeitbasis sinnvoll, da der Zeitpunkt des Absendens der Signale an den Satelliten dem Empfänger sonst nicht genau bekannt ist und somit aus den Ankunftszeiten entsprechenden Laufzeiten $38 \tau_1 = \tau_1 opt, \tau_2 = \tau_2 opt, _{v3} = \tau_3 opt,...$ nicht auf die drei Koordinaten x, y, z des Empfängers geschlossen werden könnte.

Aus der Vielzahl von Satellitensignalen sollten somit mindestens vier Signale in dieser Weise empfangbar sein, dass sie per Korrelation synchronisiert werden können, um eine Ortsbestimmung zu ermöglichen.

Insbesondere in urbanen oder bewaldeten auch gebirgigen Gebieten ist die Sichtlinie (line of sight, LOS) zwischen dem Fahrzeug und mehreren Satelliten oft nicht gegeben, womit für deren Signale aufgrund von Abschattungen eine drastische Reduktion der Empfangssignalstärke einhergeht oder im Extremfall an einem Ort nicht möglich ist.

Der Erfindung liegt deshalb die Aufgabe zu Grunde, eine Satellitennavigations-Empfangsanlage zum mobilen Empfang von Ortungssatelliten-Signalen anzugeben, welche bei teilweise unterbrochener Sichtlinie zwischen dem Fahrzeug und mehreren Satelliten, also insbesondere in urbanen oder bewaldeten oder gebirgigen Gebieten das Signal-Störverhältnis und damit das Navigationsergebnis verbessert.

Diese Aufgabe wird durch eine Satellitennavigations-Empfangsanlage nach Anspruch 1 gelöst.

Vorteilhafte Ausführungsformen sind in der Beschreibung, den Figuren und den Unteransprüchen angegeben.

Offenbart ist eine Satellitennavigations-Empfangsanlage 1 zum mobilen Empfang der von GNSS-Ortungs-satelliten $Sat_1$, $Sat_2$, $Sat_3$, ... ausgestrahlten Ortungssatelliten-Signalen, die folgendes umfassen kann:

eine GNSS-Satellitensignal-Empfangseinheit 2 zum Empfang der auf einer in der Phase digital modulierten HF-Trägerschwingung 17 von verschiedenen GNSS-Ortungs-Satelliten $Sat_1$, $Sat_2$, $Sat_3$, ... auf derselben Träger-Frequenz fo überlagert ausgestrahlten CDMA-codierten GNSS-Satelliten-Signalen $5_1$, $5_2$, $5_3$, ... umfassend:

- mindestens einen ersten Kohärenz-Quadratur-Demodulator 13a in Verbindung mit der in der GNSS-Satellitensignal-Empfangseinheit 2 vorhandenen HF-Trägerschwingung 17 der Träger-Frequenz fo zur - in Bezug auf diese - kohärenten Demodulation der überlagerten erste GNSS-Satelliten-Antennensignale $5a_1$, $5a_2$, $5a_3$, ... mit dem ersten digitalen komplexen Basisband-Signal $11a_1$, $11a_2$, $11a_3$,.. am Demodulator-Ausgang

mehrere erste CDMA-Code-Signal-Korrelatoren $10a_1$, $10a_2$, $10a_3$, ..., denen jeweils das entsprechende digitale komplexe Basisband-Signal $11a_1$, $11a_2$, $11a_3$,.. zugeführt ist und von denen jeder jeweils einem der GNSS-Satelliten-Antennensignale $5a_1$, $5a_2$, $5a_3$, ... zur Erkennung zugeordnet ist und über einen - diesem zugeordneten - gesonderten CDMA-Code $C_1$, $C_2$, $C_3$,... an dessen Ausgang jeweils das im erstes komplexen Basisband-Signal $11a_1$, $11a_2$, $11a_3$, ... enthaltene, einem GNSS-Satelliten-Antennensignal $5a_1$, $5a_2$, $5a_3$, ... jeweils entsprechende erste komplexe Korrelationssignal $12a_1$, $12a_2$, $12a_3$,... mit dem ersten Korrelationssignal-Maximalwert $34a_1$, $34a_2$, $34a_3$,... in Form der In-Phase-Komponente I 30 und der Quadratur-Komponente Q 31 des ersten komplexen Korrelationssignals $12a_1$, $12a_2$, $12a_3$,... gesondert vorliegt und ein auf einer elektrisch leitenden Grundfläche 6 aufgebautes Mehrantennensystem 3, umfassend:

- mindestens zwei Satelliten-Empfangsantennen 3a, 3b für den gesonderten, jeweils überlagerten Empfang von mehreren GNSS-Satelliten-Signalen $5_1$, $5_2$, $5_3$, ... mit jeweils azimutalem Runddiagramm der Strahlungsdichte und azimutal linearer Verteilung des Phasenwinkels ß = 0 - 2π\*N von ganzzahlig N-ter Ordnung der Strahlung über einen entsprechenden azimutalen Winkelbereich von $\alpha$ = 0 - 2π.

- eine zirkular polarisierte erste Satelliten-Empfangsantenne 3a N = 1-ter Ordnung mit Strahlungshauptrichtung zum Zenit, welche über eine Hochfrequenzleitung 40a mit einem ersten Kohärenz-Quadratur-Demodulator 13a verbunden ist;

- ein Mehrantennensystem mit mindestens einer weiteren Satelliten-Empfangsantenne 3b für den Empfang von GNSS-Satelliten-Signalen $5_1$, $5_2$, $5_3$, mit azimutalem Runddiagramm der Strahlungsdichte, deren Ordnung N < 4 beträgt;

- mindestens einen weiteren Kohärenz-Quadratur-Demodulator 13b, welchem die weiteren GNSS-Satelliten-Antennensignale $5b_1$, $5b_2$, $5b_3$, ... zugeführt sind zur - in Bezug auf die HF-Trägerschwingung 17 - kohärenten Demodulation mit dem weiteren digitalen komplexen Basisband-Signal $11b_1$, $11ba_2$, $11b_3$,.. am Demodulator-Ausgang;

- zu jedem der jeweils einem CDMA-codierten GNSS-Satelliten-Signale $5_1$, $5_2$, $5_3$, ... zugeordneten ersten Signal-Korrelatoren $10a_1$, $10a_2$, $10a_3$, ... ein hierzu gleicher, jeweils der weiteren Satelliten-Empfangsantenne 3b zugeordneter, weiterer CDMA-Code-Signal-Korrelator $10b_1$, $10b_2$, $10b_3$, ..., welchem das weitere digitale komplexe Basisband-Signal $11b_1$, $11b_2$, $11b_3$,.. zugeführt ist, und

- von denen jeder jeweils einem der weiteren GNSS-Satelliten-Antennensignale $5b_1$, $5b_2$, $5b_3$, ... zur Erkennung zugeordnet ist und über denselben - diesem zugeordneten - gesonderten CDMA-Code $C_1$, $C_2$, $C_3$,... an dessen Ausgang jeweils das im digitalen komplexen Basisband-Signal $11b_1$, $11b_2$, $11b_3$,. enthaltene, einem GNSS-Satelliten-Antennensignal $5b_1$, $5b_2$, $5b_3$, ... jeweils entsprechende weitere komplexe Korrelationssignal $12b_1$, $12b_2$, $12b_3$,... mit dem weiteren komplexen Korrelationssignal-Maximalwert $34b_1$, $34b_2$, $34b_3$,...in digitaler Form der In-Phase-Komponente I 30 und der Quadratur-Komponente Q 31 des weiteren komplexen Korrelations-signals $12b_1$, $12b_2$, $12b_3$,... gesondert vorliegt;

- für jedes der GNSS-Satelliten-Signale $5_1$, $5_2$, $5_3$, ... jeweils eine Linearkombinationsschaltung $4_1$, $4_2$, $4_3$,..,

insbesondere mit einer Steuerlogik $14_1, 14_2, 14_3, ...$ vorhanden ist, welcher der jeweils einem GNSS-Satelliten-Signal $5_1, 5_2, 5_3, ...$ zugeordnete komplexe erste Korrelationssignal-Maximalwert $34a_1, 34a_2, 34a_3,...$ und der weitere komplexe Korrelationssignal-Maximalwert $34b_1, 34b_2, 34b_3,...$ zugeführt sind, wobei diese Signale in der Linearkombinationsschaltung $4_1, 4_2, 4_3,..$ anhand komplexer Rechnung im Summationsglied $16_1, 16_2, 16_3, ...$ in der Weise linear kombinierbar sind, dass der Betrag des linear kombinierten komplexen Korrelationssignals $Kg_1, Kg_2,... 27_1, 27_2, ...$ größer ist als der Betrag des komplexen ersten Korrelationssignal-Maximalwerts $34a_1, 34a_2, 34a_3,...$ und somit das für jeden der empfangenen Satelliten im Signal-Störverhältnis verbesserte linear kombinierte Signal zur Auswertung der Navigationsdaten gelangt.

Es kann vorteilhaft sein, dass einer der komplexen Korrelationssignal-Maximalwerte $34a_1, 34a_2, 34a_3,..., 34b_1, 34b_2, ...$ durch Multiplikation in einem komplexen Faktor des Betrags 1 in der Phase in der Weise gedreht ist, dass die gleichphasige Summation im Summationsglied $16_1, 16_2, 16_3, ...$gegeben ist.

Es kann vorteilhaft sein, dass eine leitende Grundfläche 6 auf der im wesentlichen horizontalen Außenhaut eines Fahrzeugs aufgebaut ist und in der Linearkombinationsschaltung $4_1, 4_2, 4_3, ...$ jeweils eine Steuerlogik $14_1, 14_2, 14_3, ...$ vorhanden ist, in welcher diskrete komplexe Linearkombinationswerte zur Einstellung der rechnerischen komplexen Multiplikatoren $26a_1, 26a_2,.. 26b_1, 26b_2$ zur Bildung diskreter Hauptrichtungen des Strahlungsdiagramms des Mehrantennensystems 3 über den gesamten oberen Halbraum für die verschiedenen diskreten azimutalen Ausrichtungen des Fahrzeugs über den gesamten Azimut abgelegt sind. Es kann ferner vorteilhaft sein, wenn in der Steuerlogik $14_1, 14_2, 14_3, ...$ die Ortsdaten der Satelliten $Sat_1, Sat_2, Sat_3,...$ abgelegt sind und somit - bezogen auf die Fahrzeugausrichtung - die Richtung ermittelt ist, aus der die LOS-Signale (line of sight) einfallen und es kann vorteilhaft sein, wenn in der Linearkombinationsschaltung $4_1, 4_2, 4_3, ...$ die aktuelle Einstellung der Linearkombination für die sich aus der Raumrichtung der Einstrahlung des betreffenden Satelliten $Sat_1, Sat_2, Sat_3,...$ und der Fahrzeugausrichtung ergebende Hauptstrahlungsrichtung mit min. 3db Gewinn gewählt ist.

Es kann weiter vorteilhaft sein, wenn:

- ein Mehrantennensystem 3 mindestens zwei rechtsdrehend zirkular polarisierte Satelliten-Empfangsantennen 3a, 3b mit unterschiedlicher Position in der Horizontalen und einem Abstand von mehr als 1/4 der Wellenlänge insbesondere als Antennenarray für den gesonderten, jeweils überlagerten Empfang von mehreren GNSS-Satelliten-Signalen $5_1, 5_2, 5_3, ...$ mit jeweils azimutalem Runddiagramm der Strahlungsdichte N = 1-ter Ordnung mit Strahlungshauptrichtung zum Zenit umfasst,
  wobei insbesondere
- davon die erste Satelliten-Empfangsantenne 3a mit dem ersten Kohärenz-Quadratur-Demodulator 13a und die weitere Satelliten-Empfangsantenne 3b mit dem weiteren Kohärenz-Quadratur-Demodulator 13b in der GNSS-Satellitensignal-Empfangseinheit 2 verbunden ist.

Es kann vorteilhaft sein, dass das Mehrantennensystem 3 als erste Satelliten-Empfangsantenne 3a eine Ringleitungsantenne 21 mit N = 1-ter Ordnung mit rechtsdrehend zirkularer Polarisation RHCP und der Strahlungshauptrichtung zum Zenit umfasst. Diese kann als eine über der elektrisch leitenden Grundfläche 6 angeordnete Ringleitung 35 mit der Stromverteilung einer laufenden Leitungswelle in einer einzigen Umlaufrichtung, deren Phasenunterschied über einen Umlauf gerade $2\pi$ beträgt, gestaltet sein. Sie kann mit vier mit der Ringleitung 35 verbundenen und azimutal um 90 Grad gegeneinander versetzten vertikalen Strahlern 19a,... 19d mit Abgriff des ersten Empfangssignals $5a_1, 5a_2, 5a_3, ...$ an einem der vertikalen Strahler 19a zur Weiterleitung an den ersten Kohärenz-Quadratur-Demodulator 13a in der GNSS-Satellitensignal-Empfangseinheit 2 gestaltet sein.

Das Mehrantennensystem 3 kann als weitere Satelliten-Empfangsantenne 3b eine zur Ringleitungsantenne 21 der N = 1-ten Ordnung konzentrisch angeordnete, vertikale Monopolantenne 15 mit N = 0-ter Ordnung zum Empfang des weiteren Empfangssignals $5b_1, 5b_2, 5b_3, ...$ zur Weiterleitung an den weiteren Kohärenz-Quadratur-Demodulator 13b in der GNSS-Satellitensignal-Empfangseinheit 2 umfassen.

Das Mehrantennensystems 3 kann als erste Satelliten-Empfangsantenne 3a eine Ringleitungsantenne 21 der N = 1-ter Ordnung mit rechtsdrehend zirkularer Polarisation RHCP und der Strahlungshauptrichtung zum Zenit umfassen. Diese kann als eine über der elektrisch leitenden Grundfläche 6 angeordnete Ringleitung 35 mit der Stromverteilung einer laufenden Leitungswelle in einer einzigen Umlaufrichtung, deren Phasenunterschied über einen Umlauf gerade $2\pi$ betragen, mit vier mit der Ringleitung verbundenen und azimutal um 90 Grad gegeneinander versetzten vertikalen Strahlern 19a, 19b, 19c, 19d mit Abgriff des gesonderten ersten GNSS-Satelliten-Antennensignale $5a_1, 5a_2, 5a_3, ...$ der Satelliten an einem ersten der vertikalen Strahler 19a zur Weiterleitung an den ersten Kohärenz-Quadratur-Demodulator 13a in der GNSS-Satellitensignal-Empfangseinheit 2 gestaltet sein.

Das Mehrantennensystems 3 kann als weitere Satelliten-Empfangsantenne 3b eine Ringleitungsantenne 2-ter Ordnung 20 mit rechtsdrehend zirkularer Polarisation RHCP und der Strahlungshauptrichtung zum Zenit gestaltet sein. Diese kann als eine über der elektrisch leitenden Grundfläche 6 angeordnete Ringleitung 35 mit N = 2-ter Ordnung gestaltet sein mit der Stromverteilung einer laufenden Leitungswelle in einer einzigen Umlaufrichtung, deren Phasenunterschied über einen Umlauf gerade $4\pi$ betragen. Es können 8 mit der Ringleitung 35 verbundene und azimutal um 45 Grad gegeneinander versetzte weitere vertikale Strahler 22a, ... 22h mit Abgriff des weiteren GNSS-Satelliten-Antennensignals $5b_1$, $5b_2$, $5b_3$, ... an einem ersten der vertikalen Strahler 22a zur Weiterleitung an den weiteren Kohärenz-Quadratur-Demodulator 13b in der GNSS-Satellitensignal-Empfangseinheit 2 vorhanden sein.

Es kann vorteilhaft sein, dass anstelle der Ringleitungsantenne 21 der N = 1-ter Ordnung als erste Einzelantenne 3a im Zentrum der weiteren Satelliten-Empfangsantenne 3b eine Patchantenne 24 mit N = 1-ter Ordnung vorhanden ist - mit rechtsdrehend zirkularer Polarisation RHCP und einer Verteilung des Phasenwinkels der Strahlung von $\beta = 0 - 2\pi$ über dem azimutalen Raumwinkel $\alpha = 0 - 2\pi$ und der Strahlungshauptrichtung zum Zenit als erstes GNSS-Satelliten-Antennensignal $5a_1$, $5a_2$, $5a_3$, ... zur Weiterleitung an den ersten Kohärenz-Quadratur-Demodulator 13a in der GNSS-Satellitensignal-Empfangseinheit 2

Es kann vorteilhaft sein, dass das Mehrantennensystem 3 als zweite weitere Satelliten-Empfangsantenne 3c eine im Zentrum der Ringleitungsantenne 21 mit N = 1-ter Ordnung und der Monopolantenne 15 mit N=0ter Ordnung eine konzentrisch angeordnete Ringleitungsantenne 20 mit N = 2-ter Ordnung zum Empfang des dritten Empfangssignal 5c aufweist.

Es kann vorteilhaft sein, dass die erfindungsgemäße Erweiterung der Satellitennavigations-Empfangsanlage 1 in der Weise dupliziert ist, dass jeweils

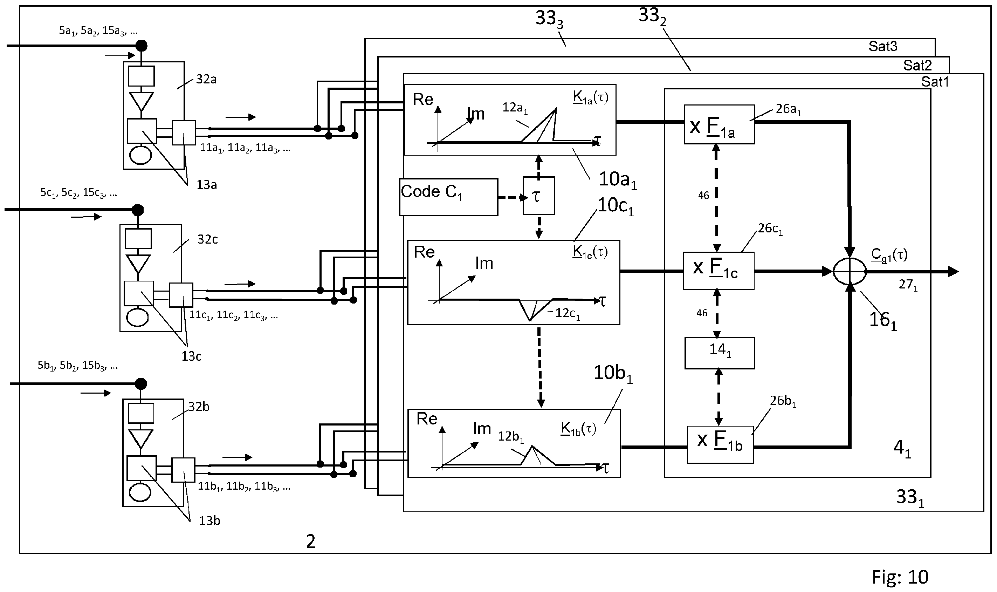

- eine zweite weitere Satelliten-Empfangsantenne 3c, mit den überlagerten zweiten weiteren GNSS-Satelliten-Antennensignalen $5c_1$, $5c_2$, $5c_3$, ...,
- ein zweiter weiterer Kohärenz-Quadratur-Demodulator 13c, welchem die weiteren GNSS-Satelliten-Antennensignale $5c_1$, $5c_2$, $5c_3$, ... zugeführt sind,
- ein zweiter weiterer CDMA-Code-Signal-Korrelator $10c_1$, $10c_2$, $10c_3$...., welchem das weitere digitale komplexe Basisband-Signal $11c_1$, $11c_2$, $11c_3$,.. zugeführt ist,

vorhanden ist, wobei

der komplexe zweite weitere Korrelationssignal-Maximalwert $34c_1$, $34c_2$, $34c_3$,... des weiteren CDMA-Code-Signal-Korrelators $10c_1$, $10c_2$, $10c_3$...., der Linearkombinationsschaltung $4_1$, $4_2$, $4_3$,.. zugeführt ist und rechnerisch im Summationsglied $16_1$, $16_2$, $16_3$, ... mit den übrigen Signalen kombiniert ist (Fig. 10).

Es kann auch vorteilhaft sein, wenn zur Einsparung der weiteren Leitungsverbindungen und der vorstehend genannten weiteren Kohärenz-Quadratur-Demodulatoren 13b, 13c zwischen den Satelliten-Empfangsantennen 3a,3b,... und der GNSS-Satellitensignal-Empfangseinheit 2 nur eine Kabelverbindung und nur ein IQ- Kohärenz-Quadratur-Demodulator vorhanden ist und dafür die GNSS-Satelliten-Antennensignale 5a, 5b, 5c der Satelliten-Empfangsantennen über eine Leistungskombinationsschaltung 102 miteinander zur Bildung eines Summensignals 5s überlagert sind, wobei zuvor jede weitere Satelliten-Empfangsantenne 3b, 3c mit einem variablen Phasendrehglied 100 verbunden ist, sodass die Trägerphase für jede der Antennen in unterschiedlicher Form zeitlich verändert wird und das so entstandene Summensignal 5s nur über eine einzige Leitungsverbindung und einen einzigen Kohärenz-Quadratur-Demodulator 13a als digitales komplexes Basisband-Summensignal 11s allen Korrelatoren zugeführt wird. Eine Zuordnung der ersten Satelliten-Empfangsantenne 3a mit dem ersten CDMA-Code-Signal-Korrelator $10a_1$, $10a_2$, $10a_3$, ... und eine Zuordnung der weiteren Satelliten-Empfangsantenne 3b mit dem weiteren CDMA-Code-Signal-Korrelator $10b_1$, $10b_2$, $10b_3$, ... und im Falle einer zweiten weiteren Satelliten-Empfangsantenne 3c eine Zuordnung der zweiten weiteren Satelliten-Empfangsantenne 3c mit dem zweiten weitern CDMA-Code-Signal-Korrelator $10c_1$, $10c_2$, $10c_3$, ... kann jeweils dadurch erfolgen, dass die zuvor erfolgte Phasendrehung über das variable Phasendrehglied 100 am Eingang des jeweils zugeordneten weiteren CDMA-Code-Signal-Korrelators $10c_1$, $10c_2$, $10c_3$....durch Multiplikation des komplexen weiteren digitalen komplexen Basisband-Signals $11c_1$, $11c_2$, $11c_3$,...mit der komplexen Phasenkorrektur 103 wieder rückgängig gemacht wird und insbesondere aus der Überlagerung der Antennensignale heraus nur der Signalanteil der ersten Satelliten-Empfangsantenne 3a während einer Codedauer mit annähernd starrer Phase am Eingang des ersten CDMA-Code-Signal-Korrelators $10a_1$, $10a_2$, $10a_3$, ... anliegt und insbesondere nur dieser Anteil nach der Korrelation über eine Codedauer hinweg zu dem ersten Korrelationssignal-Maximalwert $34a_1$, $34a_2$, $34a_3$,... beiträgt, während nur der Signalanteil der weiteren Satelliten-Empfangsantenne 3b während der Codedauer mit annähernd starrer Phase am Eingang des weiteren CDMA-Code-Signal-Korrelators $10b_1$, $10b_2$, $10b_3$, ... anliegt und nach der Integration über die Codedauer zu dem weiteren Korrelationssignal-Maximalwert $34b_1$, $34b_2$, $34b_3$,... beiträgt und im Falle einer weiteren Antenne 3c das gleiche entsprechend entsteht. Das variable Phasendrehglied 100 kann über eine Ansteuereinheit 101 in der Weise gesteuert sein bzw. werden, dass der Umlauf des Phasenwinkels $\phi b(t)$ die Eigenschaft, dass er von $0-2\pi$ bis auf etwa 10% genau mindestens einmal oder in einem ganzzahligen Vielfachen mehrmals während einer Codedauer des GNSS-Systems erfolgt, und dass im Falle mehrerer weiterer Satelliten-Empfangsantennen 3b, 3c der Umlauf der Phasenwinkel dieser Satelliten-Antennensignale zueinander ein ganzzahliges Vielfaches darstellt. In der GNSS-Satellitensignal-Empfangseinheit 2 kann die komplexe Phasenkorrektur 103 über eine entsprechende Steuerlogik $14_1$, $14_2$, $14_3$, ...

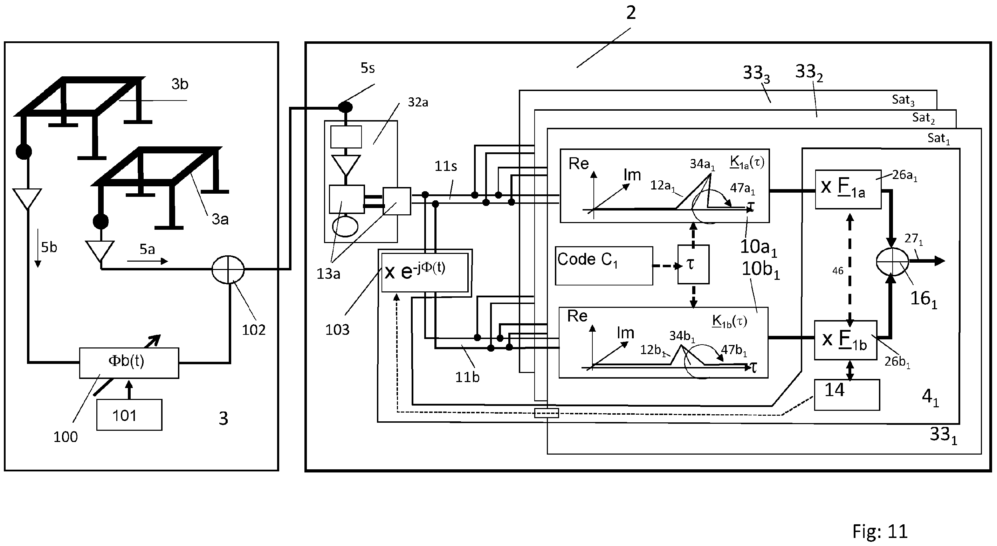

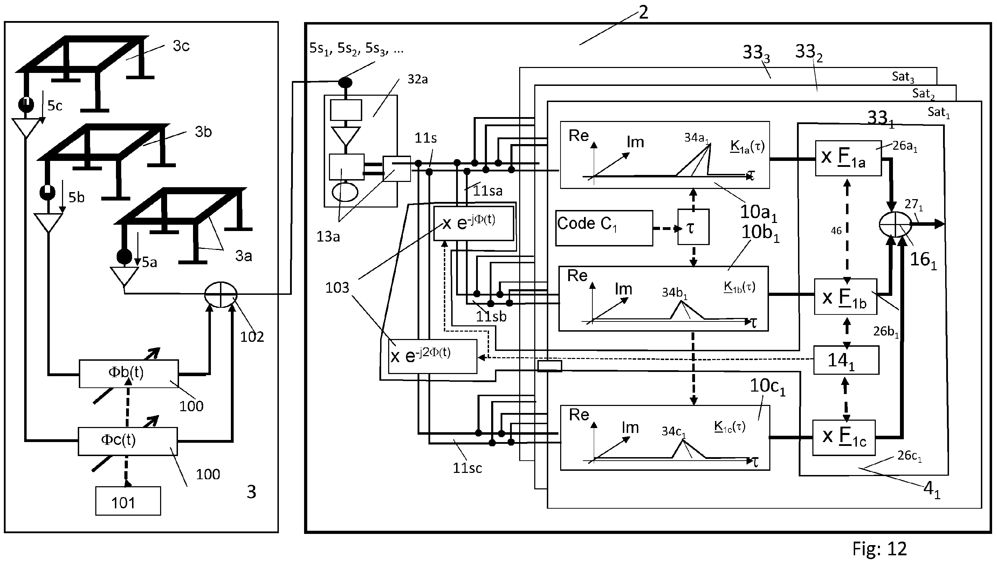

angesteuert werden, um auf etwa 10% synchron mit dem variablen Phasendrehglied 100 auch im Empfänger über den Komplexe Phasenkorrektur 103 den Umlauf des Phasenwinkels $\phi b(t)$ zurückzurechnen (Fig.11 und 12).

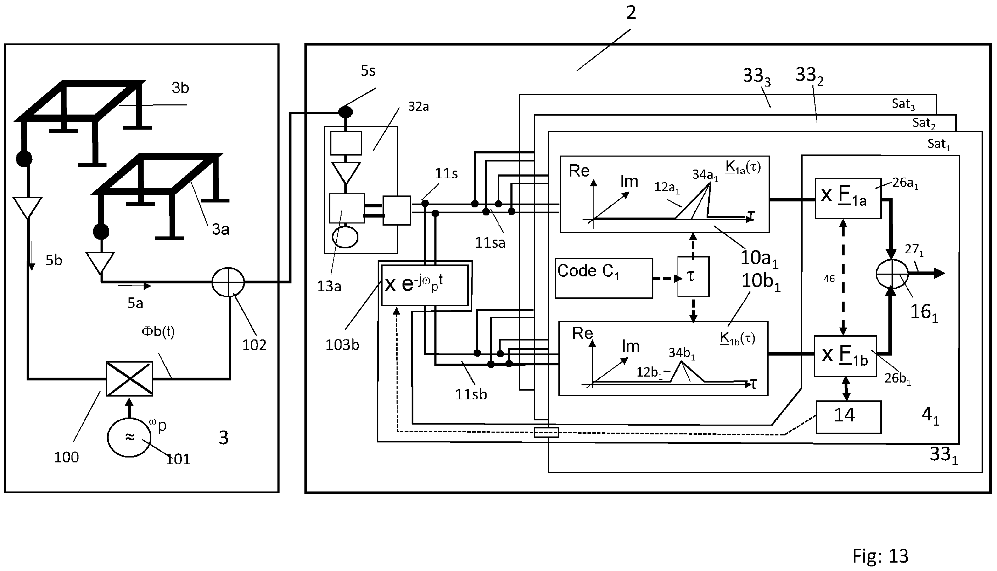

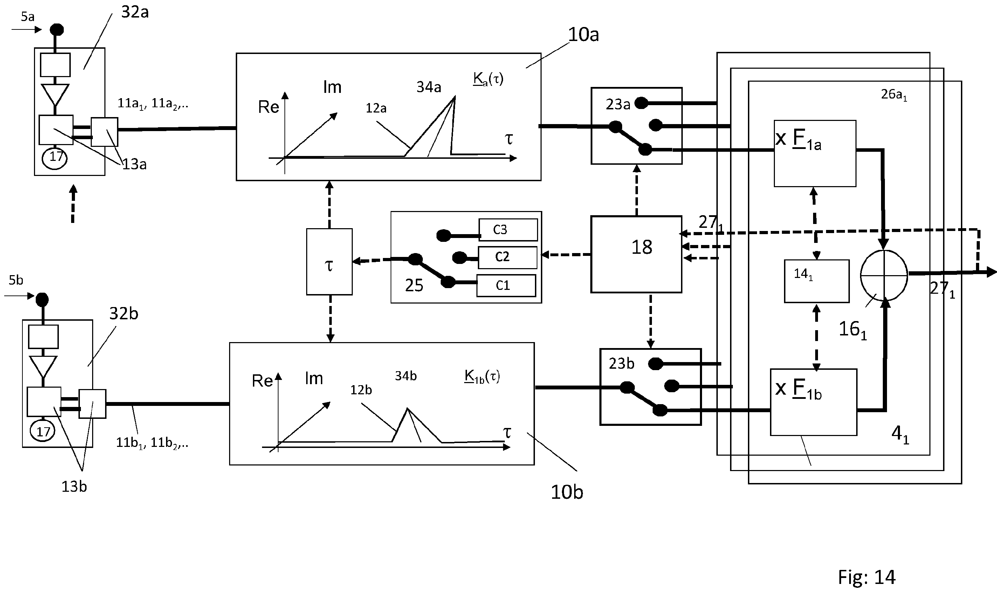

Es kann weiterhin vorteilhaft sein, wenn das variable Phasenschiebeglied 100 in Form eines Mischers ausgestaltet ist und die Ansteuereinheit in Form eines Oszillators, sodass der Umlauf des Phasenwinkels $\phi b(t)$ von 0-2 $\pi$ in Form einer Frequenzverschiebung der GNSS-Satelliten-Signale $5_1, 5_2, 5_3, ...$ der weiteren Satelliten-Empfangsantennen 3b, 3c erfolgt, deren Periode bis auf etwa 10% genau ein ganzzahliger Teiler einer Codedauer des GNSS-Systems ist, wo die Frequenzverschiebungen der weiteren Antennen zueinander ein ganzzahliges Vielfaches sind (Fig.13).

Es kann weiterhin vorteilhaftsein, wenn für mindestens einen Satelliten durch die Steuerlogik $14_1, 14_2, 14_3, ...$ in gleichen zeitlichen Abständen, welche ein ganzzahliges Vielfaches der Codedauer sind, der Zeitverlauf des Phasenunterschiedes zwischen dem Maximalwert der Korrelation $34a_1$ der ersten Satelliten-Empfangsantenne 3a und dem Maximalwert der Korrelation $34b_1$ der weiteren Satelliten-Empfangsantenne 3b und im Falle weiterer Antennen 3c, 3d... auch zwischen dem ersten Korrelationssignal-Maximalwert $34a_1$ der ersten Satelliten-Empfangsantenne 3a und den weiteren Korrelationssignal-Maximalwerten $34c_1,...; 34d_1 ...$ dieser Antennen ermittelt wird, und für jede der weiteren Satelliten-Empfangsantennen 3c, 3d... aus der zeitlichen Ableitung dieser Phasenunterschiede ein Frequenzversatz $\Delta fb$ ermittelt wird, welcher als Korrekturwert der jeweiligen Phasenkorrektur 103 des entsprechenden komplexen weiteren komplexen Basisband-Signals 11b, 11c, 11d, ... aufsummiert wird um Synchronität der jeweiligen komplexen Phasenkorrektur 103 mit dem jeweils dieser weiteren Antenne 3b, 3c, 3d... zugeordneten variablen Phasenschiebeglied 100 zu erreichen.

Eine solche Ausführung der Satellitennavigations-Empfangsanlage 1 ist, wie folgt, begründet:

Herrscht zunächst keine vollständige Synchronität zwischen der komplexen Phasenkorrektur 103 der weiteren Satelliten-Empfangsantenne 3b und dem dieser Antenne zugeordneten variablen Phasenschiebeglied 100, so entsteht für jeden Satelliten eine zeitliche Veränderung des Phasenunterschiedes zwischen dem komplexen Maximalwert der Korrelation 34a der ersten Satelliten-Empfangsantenne 3a und dem komplexen Maximalwert der Korrelation 34b der weiteren Antenne 3b. Dasselbe gilt für die Beziehung zwischen der ersten Satelliten-Empfangsantenne 3a und allen weiteren Satelliten-Empfangs-antennen 3b, 3c, .... Die Synchronität kann nun für alle weiteren Satelliten-Empfangsantennen 3b,3c,... mithilfe einer vorteilhaften Erweiterung der Rechenvorgänge in der Logikeinheit 14 erreicht werden. Dazu führt die Logikeinheit in regelmäßigen zeitlichen Abständen, welche ein ganzzahliges Vielfaches der Codedauer sind, eine Überprüfung und anschließende Korrektur des Zeitverhaltens jeweils des Phasenunterschiedes zwischen dem komplexen Maximalwert der Korrelation 34a der ersten Satelliten-Empfangsantenne 3a und dem komplexen Maximalwert der Korrelation der weiteren Satelliten-Empfangsantenne 3b, 3c,... durch.

Dieses sei im Folgenden für die Betrachtung des Satelliten 1 und die Beziehung zwischen Satelliten-Empfangsantenne 3a und 3b erläutert. In regelmäßigen zeitlichen Abständen wird in der Logikeinheit 14 der Zeitverlauf des Phasenunterschiedes zwischen dem Maximalwert der Korrelation $34a_1$ der ersten Satelliten-Empfangsantenne 3a und dem Maximalwert der Korrelation $34b_1$ der weiteren Satelliten-Empfangsantenne 3b ermittelt. Daraus wird dann in denselben zeitlichen Abständen die zeitliche Veränderung des Phasenunterschiedes als Differenz zwischen dem aktuell ermittelten Phasenunterschied und dem Phasenunterschied des vorigen Zeitpunktes ermittelt. Der Wert dieser Veränderung kann daraufhin als Korrekturwert im Rahmen einer Regelschleife an die komplexe Phasenkorrektur 103 vor dem ersten CDMA-Code-Signal-Korrelator 10a gegeben werden, um der Phasenkorrektur im Sinne der besseren Synchronität überlagert zu werden.

Vorteilhaft kann es sein, diese Operation für alle Satelliten durchzuführen, sodass über alle Satelliten hinweg ein Mittelwert über den Korrekturwert gebildet werden kann.

Im Falle weiterer Antennen 3c, 3d... kann dasselbe Verfahren auch zwischen dem ersten Korrelationssignal-Maximalwerten $34a_1$ der ersten Satelliten-Empfangsantenne 3a und jeweiligen weiteren Korrelationssignal-Maximalwerten $34c_1, 34d_1 ...$ dieser Satelliten-Empfangsantennen 3b, 3c, ... durchgeführt werden, um deren jeweilige Phasenkorrektur 103 auf deren jeweilige variable Phasendrehglieder 100 zu synchronisieren.

Mithilfe der erfindungsgemäßen Satellitennavigations-Empfangsanlage ergeben sich u.a. die folgenden besonderen Vorteile:

Diese Antennendiversity-Anordnung verbindet eine hohe Leistungsfähigkeit mit besonderer Wirtschaftlichkeit.

Durch die Bildung einer erfindungsgemäßen optimalen Linearkombination der Korrelationssignal-Maximalwerte erfolgt eine für jedes GNSS-Satellitensignal getrennte optimale Zusammenfassung der GNSS-Satelliten-Signale $5_1, 5_2, 5_3, ...$ mehrerer Antennen mit Antennengewinn in der Hauptempfangsrichtung, welche auch mit hoch komplexen Antennencombinern kaum erreichbar wäre. Das Signal-zu-Rausch-Verhältnis wird verbessert und für eine in der Regel aus der gegenüberliegenden Richtung einfallende störende Reflexion entsteht dort häufig gleichzeitig ein Minimum der Richtcharakteristik, welches zu einer signifikanten Unterdrückung des Reflexionspfades geeignet ist.

Es kann weiterhin vorteilhaft sein, wenn die Satelliten-Empfangsantennen (3a, 3b) auf einer im wesentlichen horizontalen Außenhaut eines Fahrzeugs angebracht sind, und dass in der Linearkombinationsschaltung ($4_1, 4_2, 4_3, ...$) jeweils eine Steuerlogik ($14_1, 14_2, 14_3, ...$) vorhanden ist, in welcher diskrete komplexe Linearkombinationswerte zur Einstellung der komplexen Multiplikatoren ($26a_1, 26a_2,.. 26b_1, 26b_2$) zur Nachbildung diskreter Hauptrichtungen des Strahlungsdiagramms über den gesamten oberen Halbraum für verschiedene diskrete azimutale Ausrichtungen des Fahrzeugs über den gesamten Azimut abgelegt sind, und wenn in der Steuerlogik ($14_1, 14_2, 14_3, ...$) die Ortsdaten der Satelliten $Sat_1, Sat_2, Sat_3,...$ abgelegt sind und somit - bezogen auf die Fahrzeugausrichtung - die Richtung ermittelt ist, aus der die LOS-Signale (Line of Sight Signale) einfallen, und in der Linearkombinationsschaltung ($4_1, 4_2, 4_3, ...$) die aktuelle Einstellung der Linearkombination für die sich aus der Raumrichtung der Einstrahlung des betreffenden Satelliten $Sat_1, Sat_2, Sat_3,...$ und der Fahrzeugausrichtung ergebende Hauptstrahlungsrichtung gewählt ist.

Um insbesondere bei der Verwendung beim autonomen Fahren im Straßenverkehr störende, z.B. in der Umgebung des Empfängers reflektierte Wellen mit der erfindungsgemäßen Empfangsanlage auslöschen zu können, welche nicht aus der LOS-Richtung am Empfänger ankommen, kann es für alle solchermaßen betroffenen Satelliten 1,2,3 jeweils vorteilhaft sein, wenn die komplexen Korrelationsfunktionen mit den Korrelationssignal-Maximalwerten 34a, 34b, 34c durch Multiplikation mit komplexen Faktoren und anschließende Summation im Summationsglied $16_1, 16_2, 16_3$, zu einer neuen

Korrelationsfunktion berechnet werden, in welcher der Einfluss des störenden Reflexionspfades ausgelöscht ist. Dazu werden in der Steuerlogik $14_1, 14_2, 14_3$, für die drei Antennen a, b, c Verhältnisse zwischen den komplexwertigen Strahlungsdiagrammen des Mehrantennensystems (bezogen auf einen allen Antennen gemeinsamen Mittelpunkt) in einem Speicher vorab abgelegt.

Die Strahlungsdiagramme werden im Weiteren zur Erläuterung des Verfahrens für die rechtsdrehend zirkulare Polarisation mit $\underline{Ga}_{RH}(\vartheta,\alpha)$, $\underline{Gb}_{RH}(\vartheta,\alpha)$, $\underline{Gc}_{RH}(\vartheta,\alpha)$ und für die linksdrehend zirkulare Polarisation mit $\underline{Ga}_{LH}(\vartheta,\alpha)$, $\underline{Gb}_{LH}(\vartheta,\alpha)$, $\underline{Gc}_{LH}(\vartheta,\alpha)$ bezeichnet, wobei $\vartheta$ der Winkel in Elevation und $\alpha$ der Winkel in Azimuth bezogen auf die Fahrzeugrichtung ist.

Daraus werden vor Verhältniswerte W berechnet, welche im Speicher der Steuerlogik abgelegt werden:

$$\underline{W}ba(\vartheta,\alpha) = \underline{Gb}_{RH}(\vartheta,\alpha) / \underline{Ga}_{RH}(\vartheta,\alpha) \quad ; \quad \underline{W}ca(\vartheta,\alpha) = \underline{Gc}_{RH}(\vartheta,\alpha) / \underline{Ga}_{RH}(\vartheta,\alpha)$$

$$\underline{V}ab(\vartheta,\alpha) = \underline{Ga}_{LH}(\vartheta,\alpha) / \underline{Gb}_{LH}(\vartheta,\alpha) \quad ; \quad \underline{V}ac(\vartheta,\alpha) = \underline{Ga}_{LH}(\vartheta,\alpha) / \underline{Gca}_{LH}(\vartheta,\alpha)$$

Ebenfalls sind in der Steuerlogik 14 die Richtungen mit Winkeln $\vartheta_L$ und $\vartheta_L$, $\alpha_L$ in Elevation und Azimuth, bezogen auf die Fahrzeugrichtung abgelegt, aus der die LOS-Welle (line of sight) des jeweiligen Satelliten einfällt.

Während der Positionsfindung können die Verhältniswerte Wba und Wca abhängig von den jeweils aktuellen, sich aus der Position des Fahrzeugs und dessen Ausrichtung für die Sichtverbindung zum Satelliten ergebenden LOS-Richtungswinkeln $\vartheta_L$, $\alpha_L$ ausgegeben werden:

$$\underline{W}ba = \underline{W}ba(\vartheta_L, \alpha_L) \quad ; \quad \underline{W}ca = \underline{W}ca(\vartheta_L, \alpha_L)$$

Die Richtung $\vartheta_R$ und $\phi_R$ der reflektierten Welle kann dagegen über das hier beschriebene Verfahren ermittelt werden, um deren Auslöschung zu ermöglichen. Die Vorgehensweise dazu wird im Weiteren erläutert:

Wird die komplexe Wellenamplitude der rechtsdrehend zirkular polarisierten LOS-Welle an den Antennen (bezogen auf deren gemeinsamen Mittelpunkt) mit $\underline{S}_L$ bezeichnet und die komplexe Wellenamplitude der linksdrehend polarisierten reflektierten-Welle mit $\underline{S}_R$, so ergeben sich die in den ersten und den weiteren CDMA-Code-Signal-Korrelatoren 10a, 10b, 10c vorliegenden komplexen Korrelationssignal-Maximalwerte 34a, 34b, 34c, (im weiteren $\underline{Ka}_{max}$, $\underline{Kb}_{max}$, $\underline{Kca}_{max}$ genannt) aus der Überlagerung dieser Wellen gemäß:

$$\underline{K}a_{max} = \underline{Ga}_{RH}(\vartheta_L, \alpha_L)\, \underline{S}_L + \underline{Ga}_{LH}(\vartheta_R, \alpha_R)\, \underline{S}_R$$

$$\underline{K}b_{max} = \underline{Gb}_{RH}(\vartheta_L, \alpha_L)\, \underline{S}_L + \underline{Gb}_{LH}(\vartheta_R, \alpha_R)\, \underline{S}_R$$

$$\underline{K}c_{max} = \underline{Gc}_{RH}(\vartheta_L, \alpha_L)\, \underline{S}_L + \underline{Gc}_{LH}(\vartheta_R, \alpha_R)\, \underline{S}_R$$

Die während des Empfangs ermittelten Korrelationssignal-Maximalwerte können zur weiteren Vereinfachung in ein Verhältnis gesetzt werden:

$$\underline{U}ba = \underline{K}b_{max} / \underline{K}a_{max} \quad ; \quad \underline{U}ca = \underline{K}c_{max} / \underline{K}a_{max}$$

Durch Eliminierung von $\underline{S}_L$ und $\underline{S}_R$ erhält man dann aus den obigen Gleichungen die Minimalwert-Bedingung für den Beitrag der reflektierten Welle $S_R$ zum Gesamtsignal:

$$|(1 - \underline{U}ba \, \underline{V}ab(\vartheta,\alpha)) \, (1- \underline{W}ca \, \underline{V}ac(\vartheta,\alpha)) - (1 - \underline{U}ca \, \underline{V}ac(\vartheta,\alpha)) \, (1- \underline{W}ba \, \underline{V}ab(\vartheta,\alpha))| = M(\vartheta,\alpha)$$

mit $M(\vartheta_R, \alpha_R) \to 0$

Die Richtungswinkel der reflektierten Welle $\vartheta= \vartheta_R$, $\alpha= \alpha_R$ können nun bestimmt werden, indem die obige Bedingung $M(\vartheta,\alpha) = M(\vartheta_R,\alpha_R) \to 0$ durch Minimalwertfindung erfüllt wird. Dabei entstehen die komplexen Multiplikatoren $(26b_1, 26b_2,..)$ für jeden betroffenen Satelliten mit:

$$\underline{F}b = -\underline{V}ab(\vartheta_R, \alpha_R)$$

und die komplexen Multiplikatoren $(26c_1, 26c_2,..)$ für jeden betroffenen Satelliten mit:

$$\underline{F}c = -\underline{V}ac(\vartheta_R, \alpha_R)$$

Wird nun die Korrelationsfunktion $\underline{K}_{Summe}$ am Ausgang der Linearkombinationsschaltung 4 gebildet, indem die Korrelationsfunktion $\underline{K}a$ der Antenne a und die mit dem komplexen Multiplikator $\underline{F}b$ multiplizierte Korrelationsfunktion $\underline{K}b$ der Antenne b und die mit dem komplexen Multiplikator $\underline{F}c$ multiplizierte Korrelationsfunktion $\underline{K}c$ der Antenne c in Summe überlagert werden, so entsteht am Ausgang des Summationsgliedes 16 (jeweils für jeden betroffenen Satelliten):

$$\underline{K}_{Summe}= \{ 2 \, \underline{G}a_{RH}(\vartheta_L, \alpha_L) + \underline{F}b \, \underline{G}b_{RH}(\vartheta_L, \alpha_L) + \underline{F}c \, \underline{G}c_{RH}(\vartheta_L, \alpha_L) \} \, \underline{S}_L$$

Wodurch die reflektierte Welle eliminiert wurde. und das Gewicht der Antenne a verdoppelt wurde.

Im Sinne eines optimalen Signal-zu Rausch-Verhältnisses durch Maximum Ratio Combining kann des Weiteren ganz allgemein bei Einführung eines komplexen Multiplikators $\underline{F}a$ für die Antenne a und entsprechender Modifizierung der Multiplikatoren Fb und Fc eine weitere Verbesserung erzielt werden, sodass gilt:

$$\underline{K}_{Summe} = \{ \underline{F}a \, \underline{G}a_{RH}(\vartheta_L, \alpha_L) + \underline{F}b \, \underline{G}b_{RH}(\vartheta_L, \alpha_L) + \underline{F}c \, \underline{G}c_{RH}(\vartheta_L, \alpha_L) \} \, \underline{S}_L$$

wobei Fa frei in zwei Anteile zerlegbar ist, sodass nun für die komplexen Multiplikatoren der Zusammenhang gilt:

$$\underline{F}a= \underline{F}a1+ \underline{F}a2 \quad ; \quad \underline{F}b = -\underline{V}ab(\vartheta_R, \alpha_R)*\underline{F}a1 \quad ; \quad \underline{F}c = -\underline{V}ac(\vartheta_R, \alpha_R)*\underline{F}a2$$

Das Verhältnis zwischen den Anteilen Fa1 und Fa2 kann dann so optimiert werden, dass gilt

$$|\underline{K}_{Summe}| \, / \, \{|\underline{F}a^2|+ |\underline{F}b^2|+ |\underline{F}c^2|\}^{1/2} = maximal$$

Aus der so gewonnenen von der Reflexion bereinigten und im Signal-Rauschverhältnis angehobenen Korrelationsfunktion kann dann durch Findung von deren Maximum ein von der Reflexion ungestörter Beitrag des betroffenen Satelliten zur Positionsfindung verwendet werden.

Vorteilhaft wird für die Antenne a diejenige mit dem günstigsten Strahlungsdiagramm zur Abdeckung möglichst weiter Winkelbereiche verwendet, wie das zum Beispiel bei der Ringleiterantenne erster Ordnung der Fall ist.

Die Erfindung wird im Folgenden anhand der Figuren näher beschrieben. Es zeigen:

Fig. 1:
Eine GNSS-Satellitennavigations-Empfangsanlage 1 nach dem Stand der Technik, bestehend aus einer GNSS-Satellitensignal-Empfangseinheit 2 zum Empfang der auf einer in der Phase digital modulierten HF-Trägerschwingung 17 von verschiedenen GNSS-Ortungs-Satelliten $Sat_1$, $Sat_2$, $Sat_3$, ... auf derselben Träger-Frequenz fo überlagert ausgestrahlten CDMA-codierten GNSS-Satelliten-Signalen $5_1$, $5_2$, $5_3$, .... Die den Satelliten $Sat_1$, $Sat_2$, $Sat_3$, ... zugeordneten, jedoch überlagert empfangenen GNSS-Satelliten-Antennensignale $5a_1$, $5a_2$, $5a_3$, ... der ersten Satelliten-Empfangsantenne 3a mit RHC-Polarisation sind der GNSS-Satellitensignal-Empfangseinheit 2 zur auf die Trägerfrequenz fo bezogenen kohärenten Demodulation im Kohärenz-Quadratur-Demodulator 13a mit anschließender Verteilung der digitalisierten Signale auf die jeweils einem Satelliten und dessen CDMA-Code zugeordneten ersten CDMA-Code-Signal-Korrelatoren $10a_1$, $10a_2$, $10a_3$, ... zugeführt. Diese sind beispielhaft jeweils auf gesonderten digitale Recheneinheiten $33_1$, $33_2$, $33_2$,... angeordnet. Jedem der CDMA-Code-Signal-Korrelatoren

$10a_1$, $10a_2$, $10a_3$, ... ist der satellitenspezifische CDMA-Code $C_1$, $C_2$, $C_3$,.. von einem satellitenspezifischen Code-Generator $37_1$, $37_2$, $37_3$, ... zugeführt. Am Ausgang des Kohärenz-Quadratur-Demodulators 13a stehen die In-Phase-Komponente 30 und die Quadratur-Komponente 31 des erstes komplexes Basisband-Signal 11a, 11a1, 11a2, 11a3, ... - bezogen auf die HF-Trägerschwingung 17- für die weitere Bearbeitung mit komplexer Rechnung in digitaler Form zur Verfügung.

Fig. 2:
Eine mobile GNSS-Satellitennavigations-Empfangsanlage 1 nach der Erfindung mit Antennen-Diversity-Funktion mit einem auf einer elektrisch leitenden Grundfläche 6 aufgebauten Mehrantennensystem 3 mit einer ersten und einer weiteren Satelliten-Empfangsantenne 3a, 3b und einer GNSS-Satellitensignal-Empfangseinheit 2. Die GNSS-Satelliten-Antennensignale $5a_1$, $5a_2$, $5a_3$, ... der ersten Satelliten-Empfangsantenne 3a sind dem ersten Kohärenz-Quadratur-Demodulator 13a mit dem demodulierten ersten digitalen komplexen Basisband-Signal $11a_1$, $11a_2$, $11a_3$, ... und entsprechend sind die weiteren GNSS-Satelliten-Antennensignale $5b_1$, $5b_2$, $5b_3$, ... dem weiteren Kohärenz-Quadratur-Demodulator 13b mit dem demolierten weiteren digitalen komplexen Basisband-Signal $11b_1$, $11b_2$, $11b_3$, ... zugeführt.

Das erste digitale komplexe Basisband-Signal $11a_1$, $11a_2$, $11a_3$, ... ist auf die ersten CDMA-Code-Signal-Korrelatoren $10a_1$, $10a_2$, $10a_3$, ... und das weitere digitale komplexe Basisband-Signal $11b_1$, $11b_2$, $11b_3$, ... ist entsprechend auf die weiteren CDMA-Code-Signal-Korrelatoren $10b_1$, $10b_2$, $10b_3$, ... verteilt. Alle einander entsprechenden ersten und weiteren CDMA-Code-Signal-Korrelatoren $10a_1$, $10b_1$, $10a_2$, $10b_2$,... werden paarweise jeweils durch denselben von dem entsprechenden Satelliten $Sat_1$, $Sat_2$, $Sat_3$,... ausgesendeten CDMA-Code $C_1$, $C_2$, $C_3$, ... entschlüsselt, sodass an den Ausgängen der Korrelatoren die Signale sowohl nach der Zugehörigkeit zur Satelliten-Empfangsantenne 3a, 3b als auch zu einem Satelliten $Sat_1$, $Sat_2$, $Sat_3$,...insbesondere jeweils auch als komplexer erster Korrelationssignal-Maximalwert $34a_1$, $34a_2$, $34a_3$,... bzw. komplexer weiterer Korrelationssignal-Maximalwert $34b_1$, $34b_2$, $34b_3$,... jeweils nach Betrag und Phase verfügbar sind. Diese Werte repräsentieren mit ihrem Betrag jeweils das betreffende Signalstörverhältnis. Diese ersten und weiteren Ausgangssignale werden jeweils über einen ersten bzw. einen weiteren rechnerischen komplexen Multiplikator $26a_1$, $26a_2$, ..., $26b_1$, $26b_2$ rechnerisch multipliziert und im Summationsglied $16_1$, $16_2$, $16_3$, ... in der Weise linear kombiniert sind, dass der Betrag des linear kombinierten komplexen Korrelationssignals $Kg_1$, $Kg_2$,... $27_1$, $27_2$, ... maximal ist.

Fig. 3:
zeigt ein erste und ein weiteres GNSS-HF-Frontend 32a, 32b mit Bandpassfilter 28a, 28b und Verstärker 29a, 29b und den ersten bzw. weiteren Kohärenz-Quadratur-Demodulator 13a, 13b mit A/D-Wandler 39 und dem ersten digitalen komplexen Basisband-Signal $11a_1$, $11a_2$, $11a_3$, ...bzw. dem weiteren digitalen komplexen Basisband-Signal $11b_1$, $11b_2$, $11b_3$, ... mit Bezug auf die in der GNSS-Satellitensignal-Empfangseinheit 2 generierte Trägerschwingung der Frequenz fo 17.

Fig. 4:

a)
zeigt eine GNSS-Satellitensignal-Empfangseinheit 2 nach der Erfindung mit einer Linearkombinationsschaltung $4_1$, $4_2$, $4_3$, ... welcher die komplexen digitalen Ausgangssignale der Korrelatoren zugeführt sind. In der Steuerlogik $14_1$, $14_2$, $14_3$, ... ist ein Rechenprogramm zur Steuerung des ersten und des weiteren komplexen rechnerischen Multiplikators $26a_1$, $26a_2$, ..., $26b_1$, $26b_2$ zur dynamischen Gestaltung der Linearkombination während der Bewegung - mit dem Ziel eines möglichst großen Summationsergebnisses im Summationsglied $16_1$, $16_2$, $16_3$, eingerichtet.

b)
zeigt den komplexen ersten Korrelationssignal-Maximalwert $34a_1$, $34a_2$, $34a_3$,... und den weiteren komplexen Korrelationssignal-Maximalwert $34b_1$, $34b_2$, $34c_3$,... in der komplexen Ebene 36. Der Betrag der beiden komplexen Werte repräsentiert jeweils das Signal-Störverhältnis in dem ersten GNSS-Satelliten-Antennensignal $5a_1$, $5a_2$, $5a_3$, bzw. in dem weiteren ...GNSS-Satelliten-Antennensignale $5b_1$, $5b_2$, $5b_3$, ... für den betreffenden Satelliten Sat1, Sat2, Sat3,.... Die Differenz zwischen den Winkelwerten der Korrelationssignal-Maximalwerte $34a_1$, $34a_2$, $34a_3$,...,$34b_1$, $34b_2$, $34b_3$,... beschreibt die Phasenwinkeldifferenz $\delta_{a1} - \delta_{b1}$ : 45 jeweils zwischen der Phase des ersten Antennensignals $\theta_{a1}$, $\theta_{a2}$, $\theta_{a3}$, ... und der Phase des jeweils weiteren Antennensignals $\theta_{b1}$, $\theta_{b2}$, $\theta_{b3}$, ... Diese Differenz ist von der Frequenzverschiebung des einfallenden Trägers aufgrund des Dopplereffekts bei Bewegung praktisch unbeeinflusst. Durch rechnerisch komplexe Gleichphasung im Summationsglied $16_1$, $16_2$, $16_3$, ... ist jeweils ein maximales Signal-Störverhältnis für die Bestimmung der Ortsdaten erreicht. Die mit der Gleichphasung erreichten Ergebnisse entsprechen somit jeweils der optimalen Ausrichtung des mit den Antennen erreichbaren Richtdiagramms bezogen auf die Einfallsrichtung der Strahlung des entsprechenden Satelliten. Gleichzeitig ist der unerwünschte Empfang reflektierter und in der Phase gedrehter Strahlung aus der Gegenrichtung in der Regel reduziert.

Fig. 5:
Zeigt ein Satellitennavigations-Empfangsanlage 1 nach der Erfindung mit GNSS-Satellitsignal-Empfangseinheit 2 und dem Mehrantennensystems 3. Dieses umfasst mindestens zwei beispielsweise rechtsdrehend zirkular polarisierte Satelliten-Empfangsantennen 3a, 3b mit unterschiedlicher Position in der Horizontalen und einem Abstand von mehr als 1/4 der Wellenlänge als Antennenarray für den gesonderten, jeweils überlagerten Empfang von mehreren GNSS-Satelliten-Signalen $5_1$, $5_2$, $5_3$, ... mit jeweils azimutalem Runddiagramm der Strahlungsdichte N = 1-ter Ordnung mit Strahlungshauptrichtung zum Zenit. Hierbei ist die erste Satelliten-Empfangsantenne 3a mit dem ersten Kohärenz-Quadratur-Demodulator 13a und die weitere Satelliten-Empfangsantenne 3b mit dem weiteren Kohärenz-Quadratur-Demodulator 13b in der GNSS-Satellitensignal-Empfangseinheit 2 verbunden.

Fig. 6:
Zeigt ein Satellitennavigations-Empfangsanlage 1 nach der Erfindung mit GNSS-Satellitsignal-Empfangseinheit 2 und dem Mehrantennensystems 3. Dieses umfasst eine Ringleitungsantenne 21 mit N = 1-ter Ordnung als erste Satelliten-Empfangsantenne 3a mit beispielsweise rechtsdrehend zirkularer Polarisation RHCP und einer Strahlungshauptrichtung zum Zenit mit der Stromverteilung einer laufenden Leitungswelle in einer einzigen Umlaufrichtung, deren Phasenunterschied über einen Umlauf gerade $2\pi$ beträgt, mit dem ersten Empfangssignal 5a und als zweite Satelliten-Empfangsantenne 3b eine vertikale Monopolantenne 15 mit N = 0-ter Ordnung zum Empfang des zweiten Empfangssignal 5b.

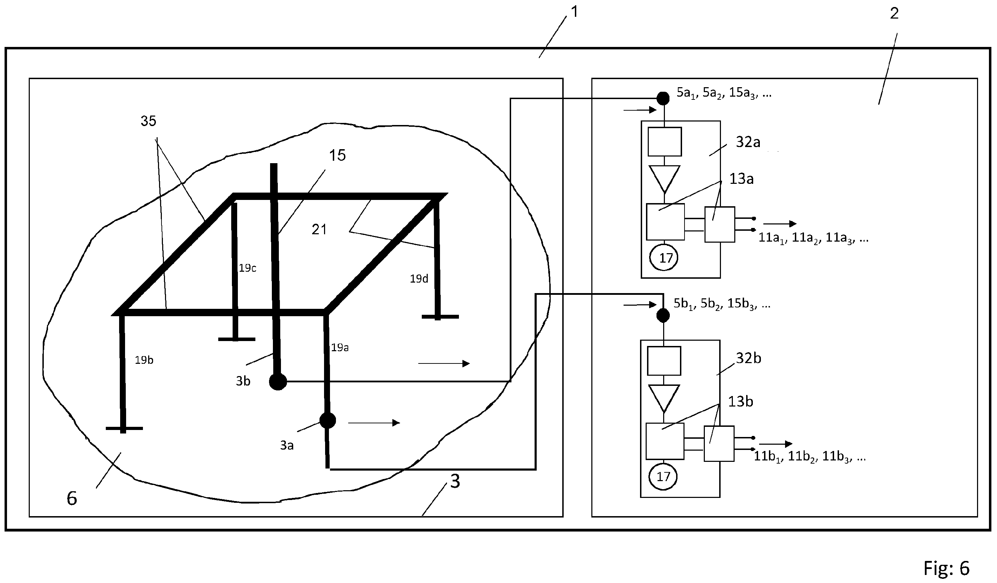

Fig. 7:
Das Mehrantennensystems 3 nach der Erfindung umfasst, wie in Fig. 6, als erste Satelliten-Empfangsantenne 3a die Ringleitungsantenne 21 mit N = 1-ter Ordnung mit rechtsdrehend zirkularer Polarisation RHCP und der Strahlungshauptrichtung zum Zenit, umfassend eine über der elektrisch leitenden Grundfläche 6 angeordnete Ringleitung 35 mit der Stromverteilung einer laufenden Leitungswelle in einer einzigen Umlaufrichtung, deren Phasenunterschied über einen Umlauf gerade $2\pi$ beträgt, mit vier mit der Ringleitung 35 verbundenen und azimutal um 90 Grad gegeneinander versetzten vertikalen Strahlern 19a, 19b, 19c, 19d mit Abgriff des ersten Empfangssignals 5a an einem ersten der vertikalen Strahler 19a zur Weiterleitung an den ersten Kohärenz-Quadratur-Demodulator 13a in der GNSS-Satellitensignal-Empfangseinheit 2.
Das Mehrantennensystems 3 umfasst als zweite Satelliten-Empfangsantenne 3b eine Ringleitungsantenne 2-ter Ordnung 20 mit beispielsweise rechtsdrehend zirkularer Polarisation RHCP und der Strahlungshauptrichtung zum Zenit, umfassend eine über der elektrisch leitenden Grundfläche 6 angeordnete Ringleitung 20 mit N = 2-ter Ordnung mit der Stromverteilung einer laufenden Leitungswelle in einer einzigen Umlaufrichtung, deren Phasenunterschied über einen Umlauf gerade $4\pi$ beträgt, mit acht mit der Ringleitung 20 verbundenen und azimutal um 45 Grad gegeneinander versetzten weiteren vertikalen Strahlern 22a,...22h mit Abgriff des zweiten Empfangssignals 5a an einem ersten der vertikalen Strahler 22a zur Weiterleitung an den weiteren Kohärenz-Quadratur-Demodulator 13b in der GNSS-Satellitensignal-Empfangseinheit 2.

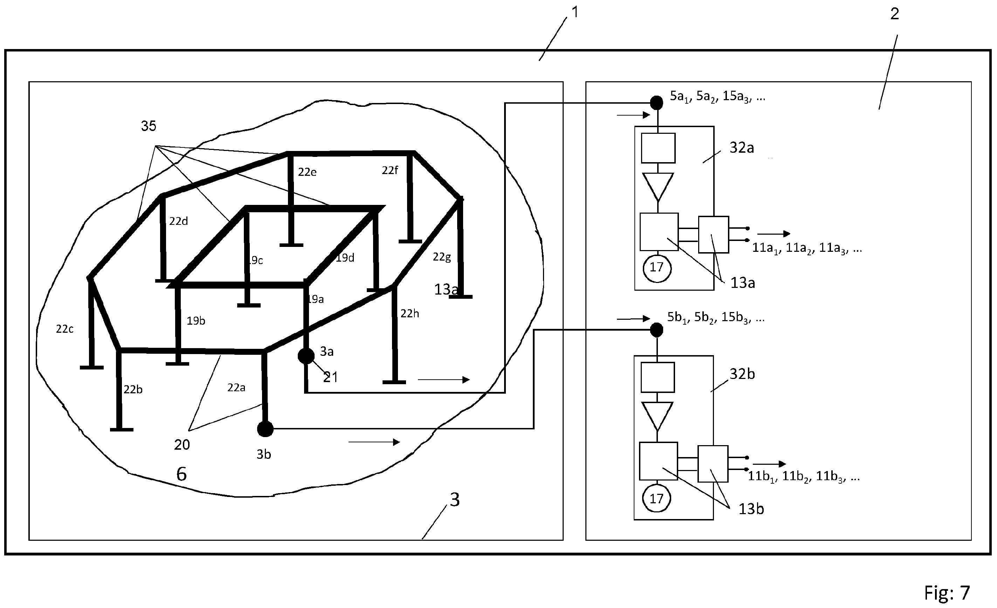

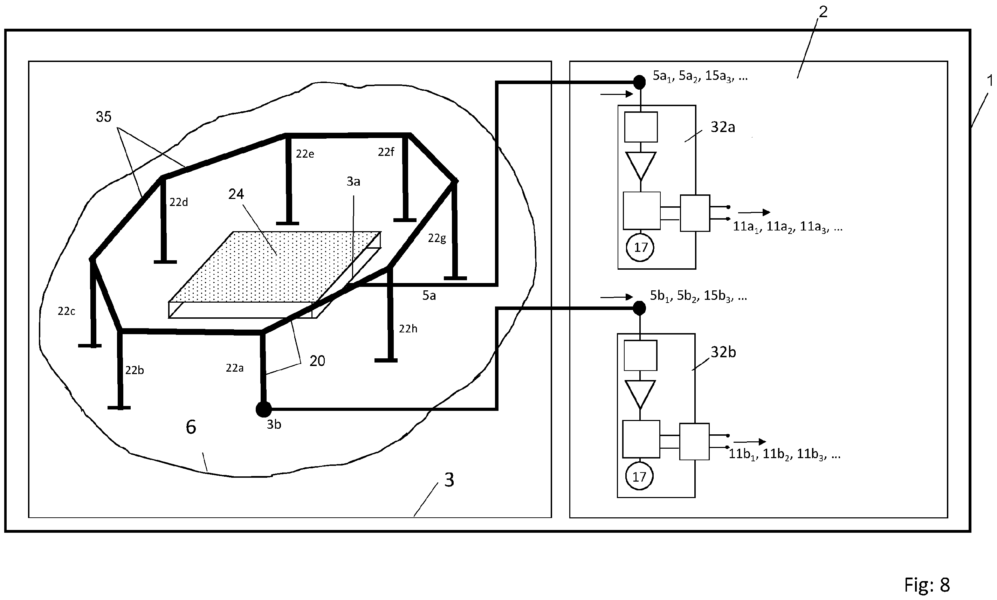

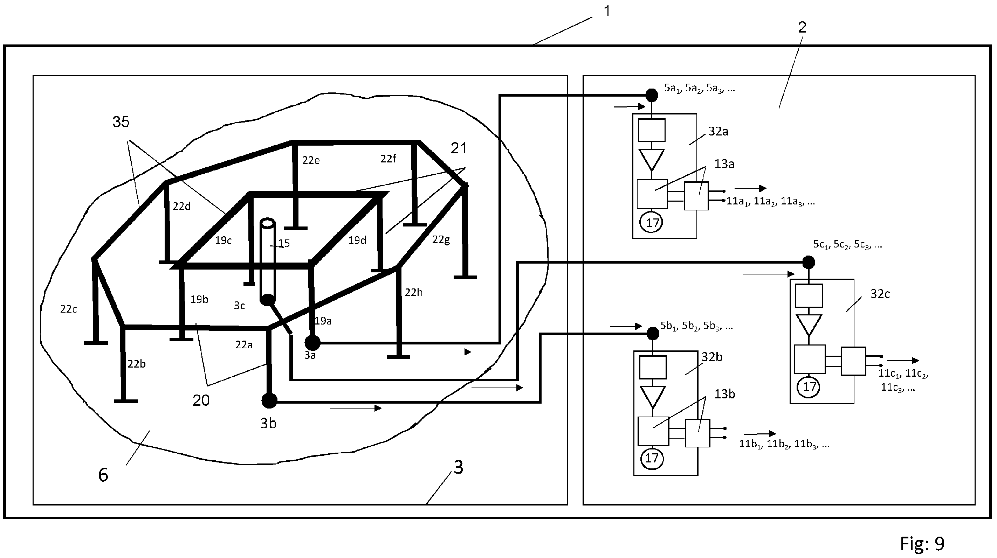

Fig. 8:
Zeigt ein Satellitennavigations-Empfangsanlage 1 nach der Erfindung, in welcher anstelle der Ringleitungsantenne 21 der N = 1-ten Ordnung in Fig.7, als erste Satelliten-Empfangsantenne 3a im Zentrum der weiteren Satelliten-Empfangsantenne 3b eine Patchantenne 24 mit N = 1-ter Ordnung vorhanden ist, mit rechtsdrehend zirkularer Polarisation RHCP und einer Verteilung des Phasenwinkels der Strahlung von $\beta = 0 - 2\pi$ über dem azimutalen Raumwinkel $\alpha = 0 - 2\pi$ und der Strahlungshauptrichtung zum Zenit als erste GNSS-Satelliten-Antennensignale $5a_1$, $5a_2$, $5a_3$, ... zur Weiterleitung an den ersten Kohärenz-Quadratur-Demodulator 13a in der GNSS-Satellitensignal-Empfangseinheit 2.

Fig. 9:
Zeigt ein Satellitennavigations-Empfangsanlage 1 nach der Erfindung wie in Figur 7, wobei das Mehrantennensystems 3 jedoch zusätzlich als dritte Satelliten-Empfangsantenne 3b eine im Zentrum der Ringleitungsantenne 21 mit N = 1-ter Ordnung konzentrisch angeordnete, vertikale Monopolantenne 15 mit N = 0-ter Ordnung zum Empfang des dritten GNSS-Satelliten-Antennensignals 5c aufweist zur Weiterleitung an den zweiten weiteren Kohärenz-Quadratur-Demodulator 13c in der GNSS-Satellitensignal-Empfangseinheit 2 .

Fig. 10:
Zeigt die Erweiterung der GNSS-Satellitensignal-Empfangseinheit 2 nach der Erfindung um einen zweiten weiteren Kohärenz-Quadratur-Demodulator 13c und um die zweiten weiteren CDMA-Code-Signal-Korrelatoren $10c_1$, $10c_2$, $10c_3$....Entsprechend sind in den Linearkombinationsschaltungen $4_1$, $4_2$, $4_3$,.. jeweils ein zweiter weiterer rechnerischer komplexer Multiplikator $\underline{F}_{1c}$, $\underline{F}_{2c}$, $\underline{F}_{3c}$, $26c_1$, $26c_2$, $26c_3$ und eine Steuerlogik $14_1$,$14_2$, $14_3$, ...vorhanden.

Fig. 11:

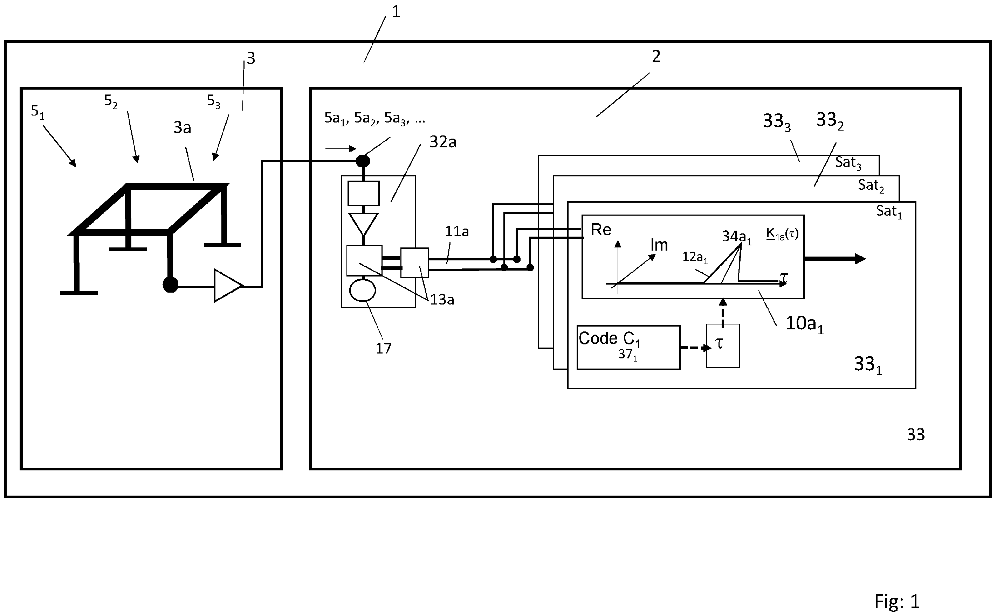

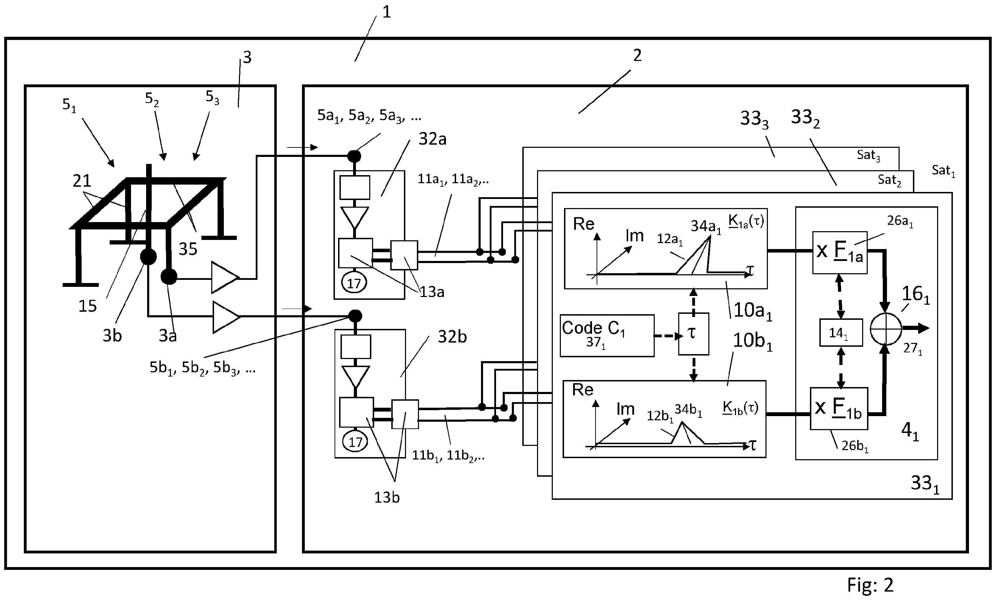

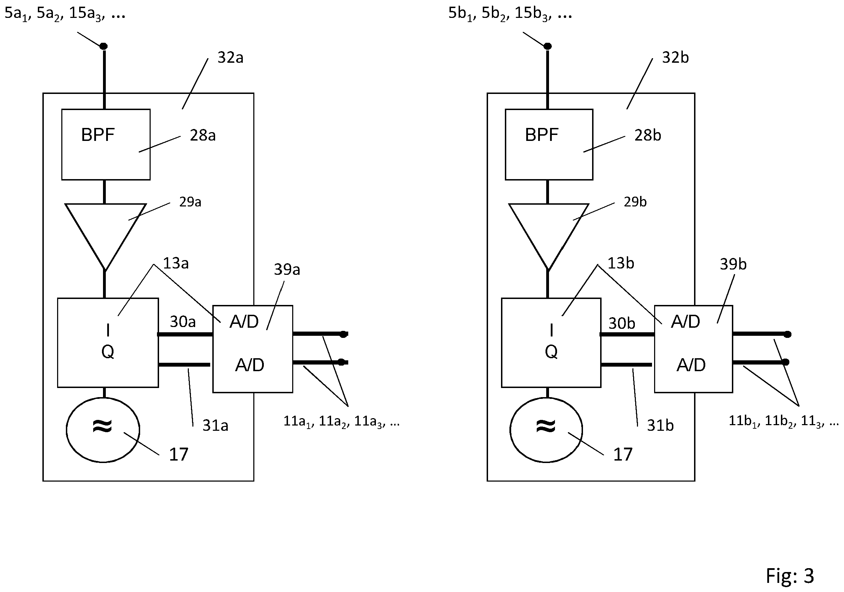

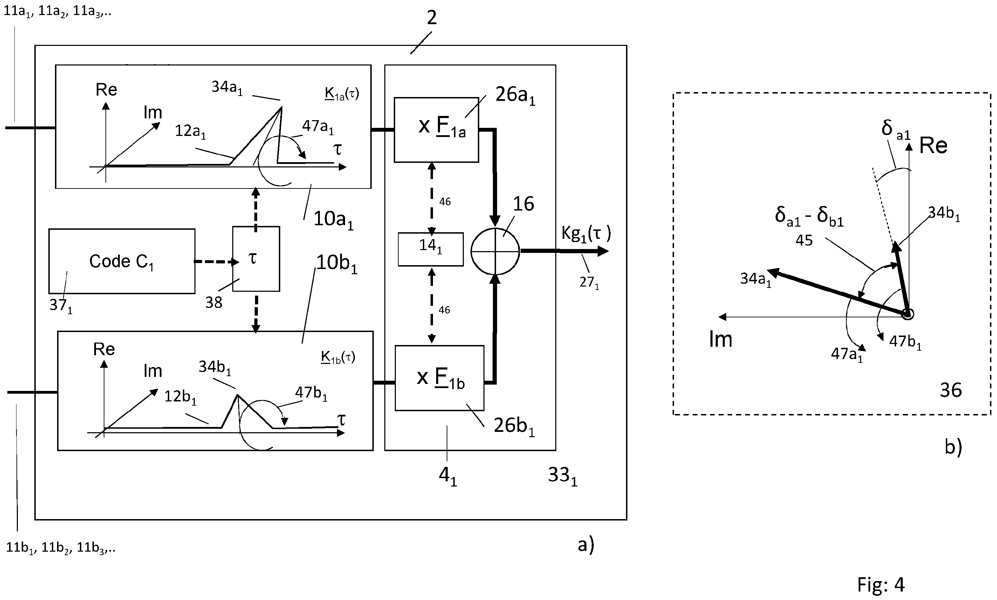

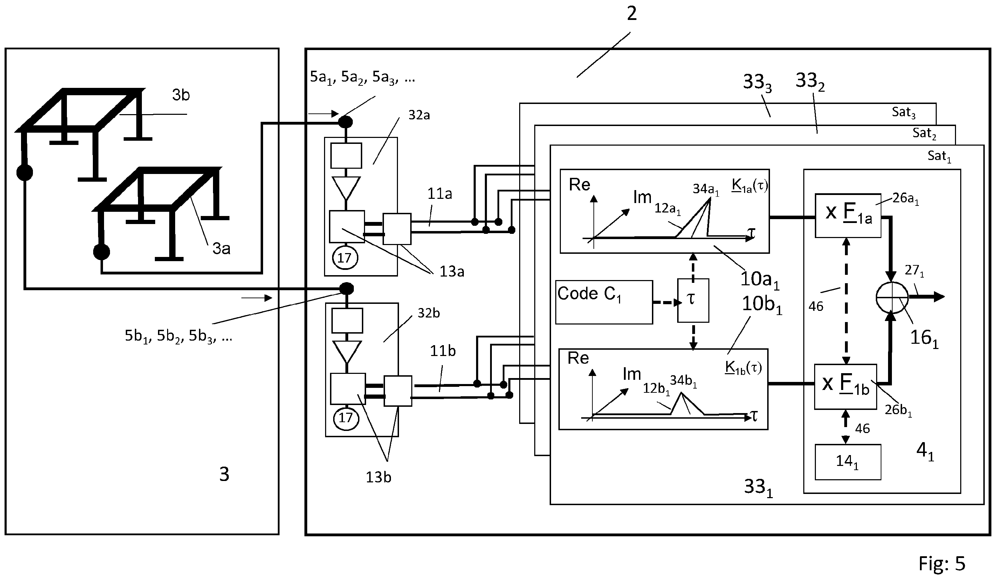

Zeigt eine zu Fig. 2 alternative Ausführungsform einer GNSS-Satellitensignal-Empfangseinheit 2 nach der Erfindung, jedoch zur Einsparung der weiteren Leitungsverbindungen mit nur einem GNSS-HF-Frontend 32 und somit nur einem Kohärenz-Quadratur-Demodulator 13a. Hierzu sind die GNSS-Satelliten-Antennensignale 5a, 5b, 5c der Satelliten-Empfangsantennen über eine Kombinationsschaltung 102, beispielsweise eine Leistungskombinationsschaltung, miteinander zur Bildung des GNSS-Satelliten-Antennen-Summensignals 5s überlagert. Vor der Summation ist die weitere Satelliten-Empfangsantenne 3b mit einem variablen Phasendrehglied 100 verbunden, sodass die Trägerphase für diese Antenne in unterschiedlicher Form zeitlich verändert wird und das so entstandene Summensignal 5s nur über eine einzige Leitungsverbindung und einen einzigen IQ-Demodulator 13a als digitales komplexes Basisband -Summensignal 11s allen Korrelatoren zugeführt wird. Die Zuordnung der ersten Satelliten-Empfangsantenne 3a mit dem ersten CDMA-Code-Signal-Korrelator $10a_1$, $10a_2$, $10a_3$, ... und die Zuordnung der weiteren Satelliten-Empfangsantenne 3b mit dem weiteren CDMA-Code-Signal-Korrelator $10b_1$, $10b_2$, $10b_3$....entsteht jeweils dadurch, dass die zuvor erfolgte Phasendrehung über das variable Phasendrehglied 100 am Eingang des jeweils zugeordneten CDMA-Code-Signal-Korrelators durch Multiplikation des komplexen digitalen Basisband-Signals mit der komplexen Phasenkorrektur 103 wieder rückgängig gemacht wird.

Fig. 12:

Zeigt eine GNSS-Satellitensignal-Empfangseinheit 2 nach der Erfindung wie in Figur 11, wobei jedoch eine zweiten weiteren Satelliten-Empfangsantenne 3c und ein weiteres variables Phasendrehglied 100 vorhanden sind und der Umlauf der Phasenwinkel dieser weiteren GNSS-Satelliten-Antennensignale $5b_1$, $5b_2$, $5b_3$, ..., $5c_1$, $5c_2$, $5c_3$, ...zueinander ein ganzzahliges Vielfaches darstellt. In der GNSS-Satellitensignal-Empfangseinheit 2 wird die komplexe Phasenkorrektur 103 über eine entsprechende Steuerlogik $14_1$,$14_2$, $14_3$, ... angesteuert, um auf 10% synchron mit dem variablen Phasendrehglied 100 auch im Empfänger über den Multiplikator 103 den Umlauf des Phasenwinkels $\phi b(t)$ zurückzurechnen. Diese Erweiterung ist naturgemäß nicht auf zwei weitere Satelliten-Empfangsantenne 3b, 3c - wie hier im Beispiel eines linearen Antennenarrays - beschränkt, sondern kann grundsätzlich sehr weit fortgesetzt werden. Eine vorteilhafte Ausführung des Mehrantennensystems 3 umfasst zum Beispiel auch eine Anordnung einer Kreisgruppe von Satelliten-Empfangsantennen 3a, 3b, .... mit der erfindungsgemäßen Ausrichtung der Hauptrichtung des Richtdiagramms auf den jeweils empfangenen Satelliten Sat1, Sat2, Sat3,...

Fig. 13:

Zeigt eine GNSS-Satellitensignal-Empfangseinheit 2 nach der Erfindung wie in Fig. 11, wobei jedoch das variable Phasenschiebeglied 100 in Form eines Mischers ausgestaltet ist und die Ansteuereinheit 101 in Form eines Oszillators mit der Kreisfrequenz $\omega_p = 2*f_p$, sodass der Umlauf des Phasenwinkels $\phi b(t)$ von $0$-$2\pi$ in Form einer Frequenzverschiebung der GNSS-Satelliten-Antennensignale 5b, 5c, ... der weiteren Satelliten-Empfangsantennen 3b, 3c jeweils im Mischprodukt am Mischerausgang gegeben ist und die Periode der Frequenzverschiebung z.B. bis auf etwa 10% genau ein ganzzahliger Teiler m einer Codedauer des GNSS-Systems ist, wobei die Frequenzverschiebungen der mehreren weiteren Antennen zueinander ein ganzzahliges Vielfaches sind.

Im GPS -System beträgt die Codedauer TC zum Beispiel etwa TC = 1ms. Bei Verwendung der oberen Seitenbandschwingung ist das weitere GNSS-Satelliten-Antennensignale 5b, bzw. 5c etc. in der Frequenz um die Oszillatorfrequenz nach der Mischung positiv verschoben. Die Oszillatorfrequenz $f_p$ kann in diesem Fall vorteilhaft bis auf 10 % genau $f_b = m*1/TC = m*1kHz$ gewählt werden.

Auf vorteilhafte Weise kann der Oszillator in die GNSS-Satellitensignal-Empfangseinheit 2 eingebracht und das Oszillatorsignal kann über eine koaxiale Leitungsverbindung zum variablen Phasendrehglied 100 geführt sein.

Fig. 14:

Nach einer vorteilhaften Ausführung der Erfindung wird die hohe Anzahl der in den Figuren beschriebenen ersten und weiteren CDMA-Code-Signal-Korrelatoren aus Gründen der Wirtschaftlichkeit reduziert. Die Figur zeigt beispielhaft einen Ausschnitt der GNSS-Satellitensignal-Empfangseinheit 2 nach der Erfindung wie in Fig. 2 jedoch mit dem Unterschied, dass für den Empfang der Vielfalt von den Satelliten ausgestrahlten GNSS-Satelliten-Signale $5_1$, $5_2$, $5_3$, ... und von der ersten Satelliten-Empfangsantenne 3a empfangenen GNSS-

Satelliten-Antennensignale $5a_1$, $5a_2$, $5a_3$, ... nur ein erster CDMA-Code-Signal-Korrelator 10a vorhanden ist und ebenso für die von der weiteren Satelliten-Empfangsantenne 3b empfangenen GNSS-Satelliten-Antennensignale $5a_1$, $5a_2$, $5a_3$, ... nur ein weiterer CDMA-Code-Signal-Korrelator 10b vorhanden ist. Zeitsequenziell wird - zur Prüfung der Signalanteile eines bestimmten Satelliten Sat1, Sat2, Sat3,... im Empfangssignal - jeweils der im GNSS-Satellitensignal-Empfangseinheit 2 vorhandene und diesem Satelliten Sat1, Sat2, Sat3 entsprechende satellitenspezifische CDMA-Code C1, C2, C3, dem ersten CDMA-Code-Signal-Korrelator 10a und dem weiteren CDMA-Code-Signal-Korrelator 10b zugeführt.

Die Wahl eines bestimmten GNSS-Satelliten-Signals $5_1$, $5_2$, $5_3$, ... kann durch Einstellung des wahlschaltbaren Codes-Generator 25 durch den SignalProzessor 18 zur Zuführung des entsprechenden CDMA-Code C1, C2, C3, ... an die CDMA-Code-Signal-Korrelatoren 10a, 10b erfolgen und durch entsprechende Einstellung der den CDMA-Code-Signal-Korrelatoren 10a, 10b nachgeschalteten steuerbaren Umschaltern 23a bzw. 23b zur Zuführung des ersten Korrelationssignal-Maximalwerts 34a und des weiteren Korrelationssignal-Maximalwerts 34b an die satellitenspezifische Linearkombinationsschaltung $4_1$, $4_2$, $4_3$, ... Das am Ausgang der angewählten betreffenden Linearkombinationsschaltung $4_1$, $4_2$, $4_3$, ...vorliegende linear kombinierte Gesamtsignal $Kg_1$, $Kg_2$, ..., $27_1$, $27_2$, $27_3$ wird im Signalprozessor 18 bewertet, in welchem ein Ablaufprogramm zur koordinierten Steuerung des wahlschaltbaren Codes-Generator 25 und der steuerbarer Umschalter 23a und 23b abgelegt ist.

Ein selbstlernendes Ablaufprogramm kann zum Beispiel in der Weise vorteilhaft gestaltet sein, dass durch aneinander folgende, zeitsequenzielle Prüfung des jeweils betreffenden linear kombinierten Gesamtsignals $Kg_1$, $Kg_2$, ..., $27_1$, $27_2$, $27_3$ eine Reihung entsprechend dessen Größe gebildet ist, um daraus für empfangswürdige GNSS-Satelliten-Signale $5_1$, $5_2$, $5_3$, ... einen Zyklus mit optimaler Zykluszeit zu generieren.

Fig. 15:

zeigt beispielhaft eine Satellitennavigations-Empfangsanlage 1 nach der Erfindung mit einer ersten Satelliten-Empfangsantenne 3a und einer weiteren Satelliten-Empfangsantenne 3b als Mehrantennensystem 3 mit einer GNSS-Satellitensignal-Empfangseinheit 2, in welcher nur ein erster Kohärenz-Quadratur-Demodulator 13a und die ersten und weiteren CDMA-Code-Signal-Korrelatoren $10a_1$, $10a_2$, $10a_3$, ...$10b_1$, $10b_2$, $10b_3$...., sowie die satellitenspezifischen Linearkombinationsschaltungen $4_1$, $4_2$, $4_3$, ... vorhanden sind.

Zur Einsparung von weiteren Leitungsverbindungen und weiteren IQ-Demodulatoren 13b, 13c, ... sind nur eine elektrische Leitung 104 als Verbindung zwischen den örtlich abgesetzten Antennen und der GNSS-Satellitensignal-Empfangseinheit 2 und nur ein IQ-Demodulator vorhanden. Die Verwendung nur einer einzigen Leitungsverbindung 104 ist aus wirtschaftlichen Gründen insbesondere bei mobilen Anwendungen - zum Beispiel auf einem Fahrzeug - dann angezeigt, wenn das Mehrantennensystem räumlich von der GNSS-Satellitensignal-Empfangseinheit 2 abgesetzt sind.

Die Einsparung weiterer Leitungen ist erfindungsgemäß u. a. dadurch ermöglicht, dass das weitere GNSS-Satelliten-Antennensignal 5b im variablen Phasendrehglied 100b gemäß der erfindungsgemäß periodischen Phasenveränderungen $\phi b(t)$ in einem ganzzahligen Vielfachen während der Codezeit zwischen 0 und $2\pi$ verändert, mit dem ersten GNSS-Satelliten-Antennensignal 5a in der Leistungskombinationsschaltung 102 zusammengefasst und über die nur eine elektrische Leitung 104 dem IQ-Demodulator 13a zur Bildung des komplexen Basisband -Summensignal 11s zugeführt wird.

Das komplexe Basisband -Summensignal 11s, bestehend aus den Signalinhalten des ersten GNSS-Satelliten-Antennensignals 5a und des in der Phase um $\phi b(t)$ verschobenen weiteren GNSS-Satelliten-Antennensignals 5b' wird nun in unveränderter Form gemeinschaftlich allen satellitenspezifischen ersten CDMA-Code-Signal-Korrelatoren $10a_1$, $10a_2$, $10a_3$, ... zugeführt mit dem Ziel der Erreichung der satellitenspezifischen ersten Korrelationssignal-Maximalwerte $34a_1$, $34a_2$, $34a_3$, ... - welche jeweils ausschließlich Signalinhalte des ersten GNSS-Satelliten-Antennensignals 5a enthalten - und deren Einspeisung in die betreffenden satellitenspezifischen Linearkombinationsschaltung $4_1$, $4_2$, $4_3$, ... Weiterhin wird das komplexe Basisband-Summensignal 11s durch eine digitale rechnerische komplexe Multiplikation mit einer komplexen Phasenkorrektur 103b um die Phasenrückverschiebung - $\phi b'(t)$ als komplexes Basisband-Summensignal 11s' gemeinschaftlich allen satellitenspezifischen weiteren CDMA-Code-Signal-Korrelatoren $10b_1$, $10b_2$, $10b_3$, ... zugeführt mit dem Ziel zur Erreichung der satellitenspezifischen ersten Korrelationssignal-Maximalwerte $34b_1$, $34b_2$, $34b_3$... - welche jeweils ausschließlich Signalinhalte des weiteren GNSS -Satelliten-Antennensignals 5b enthalten - und deren Einspeisung in die betreffenden satellitenspezifischen Linearkombinationsschaltung $4_1$, $4_2$, $4_3$, ...

Die Funktion der Unterdrückung der jeweils unerwünschten Signalanteile in den satellitenspezifischen Korrelationssignal-Maximalwerten $34a_1$, $34a_2$, ... bzw. $34b_1$, $34b_2$, ... ist durch die Filterwirkung der Korrelatoren bei der erfindungsgemäßen Wahl der oben angegebenen periodischen Phasenverschiebung nach der Zeitfunktion $\phi b(t)$ und deren Rückverschiebung um -$\phi b'(t)$ in der mathematischen Ableitung näher erläutert.

Die Verwirklichung einer derartigen periodischen Phasenverschiebung nach der Zeitfunktion $\phi b(t)$ kann auf

mehrfach unterschiedliche Weise erfolgen.

Hierzu werden folgende Beispiele benannt:

- Das Variable Phasendrehglied 100b kann durch eine selbstgesteuerte Ansteuereinheit 101 in der Weise angesteuert sein, dass die Zeitfunktion $\phi b(t)$ einer periodischen Sägezahn-Schwingung folgt mit einem linearen periodischen Phasenanstieg von jeweils 0 bis $2\pi$ und dieser Anstieg ganzzahlig m-fach während der Zeitdauer TC des Codes durchgeführt ist. Hierdurch ist eine Frequenzverschiebung des Hochfrequenzträgers fo um $\Delta f = m/Tc$ bewirkt. Die Zurückverschiebung der Phase um $-\phi b'(t)$ kann beispielhaft durch die von der Steuerlogik 14 gesteuerten komplexen Phasenkorrektureinheit 103b digital rechnerisch erfolgen.

- Das Variable Phasendrehglied 100b kann durch einen Frequenzmischer und die Ansteuereinheit 101 kann als eigenständiger Oszillator 105 mit der entsprechende Frequenz $\Delta f = m/Tc$ realisiert sein. Durch Ansteuerung des Frequenzmischers mit diesem Oszillatorsignal liegt am Mischerausgang das um diese Differenzfrequenz verschobene weitere GNSS-Satelliten-Antennensignals 5b'vor.

- In einer vorteilhaften Variante hierzu kann die Ansteuereinheit 102 in der GNSS-Satellitensignal-Empfangseinheit 2 untergebracht sein und zum Beispiel sowohl die Funktion eines Oszillators mit der Frequenz $\Delta f = m/Tc$ und einer Steuerfunktion für die Ansteuerung der gesteuerten komplexen Phasenkorrektureinheit 103b beinhalten. In einer besonders vorteilhaften Ausführung ist die elektrische Leitung 105 als Koaxialleitung ausgeführt, welcher über entsprechende Frequenzfilter das Oszillatorsignal 105 eingespeist wird und das Oszillatorsignal 105 im Mehrantennensystem 3 aus der Leitung ausgekoppelt und dem Frequenzmischer zugeführt wird. Als besonderer Vorteil hierbei zeigt sich die einheitliche Steuerung der Phasen-Vorverschiebung und der PhasenRückverschiebung durch die in der Empfangseinheit 2 befindlichen Ansteuereinheit 101 bezüglich der Einstellung der erforderlichen Zeitbasis TC/m und des Phasenhubs $2\pi$, wodurch die Gleichheit der Vorverschiebung mit der Rückverschiebung gewährleistet ist.

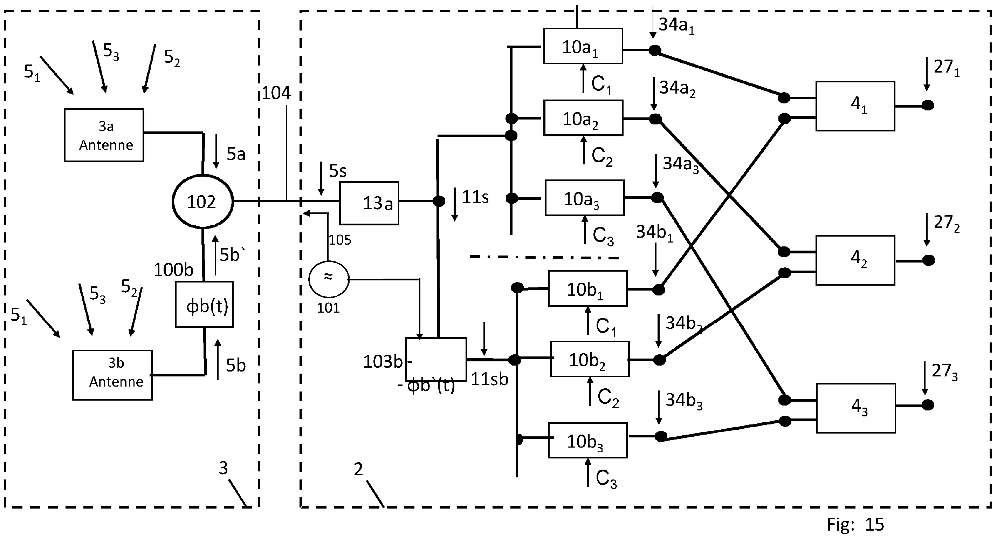

Erfindungsgemäß wird von den allgemeinen Eigenschaften eines Korrelators in der Weise Gebrauch gemacht, dass das komplexe Basisband -Summensignal 11s, bestehend aus der demodulierten Summe aus dem ersten GNSS-Satelliten-Antennensignal 5a und dem um die Phasenveränderungen $\phi b(t)$ weiteren GNSS-Satelliten-Antennensignal 5b, den ersten CDMA-Code-Signal-Korrelatoren $10a_1$, $10a_2$, $10a_3$, ... zugeführt ist. Mit dem Ergebnis, dass die am Ausgang vorliegenden ersten Korrelationssignal-Maximalwerte $34a_2$, $34a_3$, ... jeweils praktisch ausschließlich die Signalanteile des ersten GNSS-Satelliten-Antennensignals 5a wiedergeben und die Wirkung der Signalanteile des weiteren GNSS-Satelliten-Antennensignals 5b selektiv unterdrückt ist. Umgekehrt ist das um die Phasenveränderung digital um die Phasenveränderungen $-\phi b(t)$ zurück verschobene komplexe Basisband - Summensignal 11sb den weiteren CDMA-Code-Signal-Korrelatoren $10c_1$, $10c_2$, $10c_3$.... zugeführt mit dem Ergebnis, dass die am Ausgang vorliegenden weiteren Korrelationssignal-Maximalwerte $34b_1$, $34b_2$, ... jeweils praktisch ausschließlich die Signalanteile des weiteren GNSS-Satelliten-Antennensignals 5b wiedergeben und die Wirkung der Signalanteile des ersten GNSS-Satelliten-Antennensignals 5a selektiv unterdrückt ist. Diese Funktion wird am Beispiel eines Satellitensignals anhand des Blockschaltbilds in Fig. 15 näher erklärt.

Die Unterdrückung der unerwünschten Signalanteile bei der Bildung der ersten und der weiteren Korrelationssignal-Maximalwerte im betreffenden Korrelator erlaubt es, diese erfindungsgemäß gesondert jeweils einer Linear-kombinationsschaltung $4_1$, $4_2$, $4_3$, ... zur Bildung eines im Signalstörverhältnis verbesserten linear kombinierten Gesamtsignals Kg, 27 zuzuführen.

Diese Funktion wird im Folgenden anhand einer gekürzten mathematischen Ableitung für das Beispiel des k-ten Satellitensignals im Gesamtsignal aller s überlagerten Satellitensignale und für nur eine erste Satelliten-Empfangsantenne 3a und eine weitere Satelliten-Empfangsantenne 3b nachgewiesen.

Hierzu werden folgende Begriffe eingeführt:

Antenne1 : erste Antenne; Antenne2: weitere Antenne
t: Zeit; $\omega HF$ : $2\pi fo$; $j^2$: -1; e: Eulersche Zahl; $\pi$ : Kreiszahl
$e^{(j\omega HF\ t)}$ : hochfrequente Schwingung mit Einheitsamplitude
$\Delta t$ : Verzögerung des empfangenen Codes; $T = TC$ : zeitlich Länge des Codes
$\tau$ : Verzögerung des am Korrelator vorhandenen Codes im Empfänger Allgemein gilt: $Si(x) = \sin(x)/x$
$C(t-\Delta t)$: Satellitenspezifisches Kodierungssignal als Modulationssignal des Hochfrequenzträgers des betrachteten k-ten Satelliten mit der einheitlichen Trägerfrequenz fo.
$C(t-\tau)$: um $\tau$ verzögertes Codesignal des k-ten Satelliten im Korrelator
$\underline{A_1}(t)^*\ C(t-\Delta t)$: Komplexe Amplitude des mit dem k-ten Satellitencode modulierten Hochfrequenzträgers im ersten GNSS-Satelliten-Antennensignal 5a

$\underline{A}_2(t)^*$ C(t-Δt): Komplexe Amplitude des mit dem k-ten Satellitencode modulierten Hochfrequenzträgers im weiteren GNSS-Satelliten-Antennensignal 5b

Die hochfrequenten GNSS-Satelliten-Antennensignale 5b bzw. 5b lauten somit: $\underline{S}_{1HF}(t) = \underline{A}_1(t) \cdot C(t-\Delta t) \cdot e^{(j \, \omega HF \, t)}$; bzw. $\underline{S}_{2HF}(t) = \underline{A}_2(t) \cdot C(t-\Delta t) \cdot e^{(j \, \omega HF \, t)}$

Die erfindungsgemäße m-fache periodische Phasenverschiebung ɸb(t) wird hier beispielhaft in Form einer Frequenzverschiebung des weiteren GNSS-Satelliten-Antennensignals 5b mit Phasenänderung zwischen 0 und 2 π in der Codezeit T betrachtet und abgekürzt mit ωp1*t = 2 π/(T/m)*t beschrieben. Womit das hochfrequente GNSS-Satelliten-Antennensignale 5b' wie folgt lautet:

$$\underline{S}_{2HF}{}^{'}(t) = \underline{A}_2(t) \cdot C(t-\Delta t) \cdot e^{(j \, \omega HF \, t + \, \omega p1 t)} \; ; \; \text{mit } \omega_{p1}*t = \phi b(t)$$

Zusammengefasst mit $\underline{S}_{1HF}(t)$ in der Leistungskombinationsschaltung 102 lautet das Summensignal 5s nunmehr:

$$\underline{S}_{HF}(t) = (\underline{A}_1(t) \cdot C(t-\Delta t) + \underline{A}_2(t) \cdot C(t-\Delta t) \cdot e^{(j \, \omega p1 \, t)}) \cdot e^{(j \, \omega HF \, t)} .$$

Nach der I-Q-Demodulation mit A/D-Wandlung in dem auf die Träger-Frequenz fo bezogenen Kohärenz-Quadratur-Demodulator (13) wird dieses Signal zum digitalen GNSS-Satelliten-Antennen-Summensignal im Basisband 11s

$$\underline{S}_{demod}(t) = \underline{A}_1(t) \cdot C(t-\Delta t) + \underline{A}_2(t) \cdot C(t-\Delta t) \cdot e^{(j \, \omega p1 \, t)}$$

Das Signal $\underline{S}_{demod}(t)$ 11s - Im Folgenden mit $\underline{S}_1(t)$ benannt-wird nun einerseits gleichzeitig allen ersten CDMA-Code-Signal-Korrelatoren $10a_1$, ..., $10a_k$...., ...zugeführt.

Andererseits wird das Signal Sdemod(t) 11s um die möglichst gleiche digitale periodische Phasenverschiebung -ɸb' (t) zurück verschoben und allen weiteren CDMA-Code-Signal-Korrelatoren 10b1, ..., 10bk.... als Signal 11s' - im Folgenden mit S2(t) benannt - zugeführt, mit

$$\underline{S}_2(t) = \underline{S}_{demod}(t) \cdot e^{(-j \, \omega p2 \, t)} \quad \text{und } \text{-}\phi b{}^{'}(t) = \text{-}\omega_{p2} \, t$$

-ɸb' (t): Die nahezu gleiche digitale periodische Zurückverschiebung der Phase wird nun mit $\omega_{p2}*t$ bezeichnet.

Die verbleibende Differenz zwischen der linearen periodischen Phasenverschiebung und ihrer Rückverschiebung um den nicht vollkommen gleichen Wert - ɸb'(t) ist somit ɸb(t) - ɸb'(t) und es gilt:

$$\phi b(t) - \phi b{}^{'}(t) = \Delta\omega_p*t= (\omega_{p1} - \omega_{p2})*t < \omega_{p1}*t/10,$$

wenn diese Abweichung kleiner als 10% und damit die Differenz-Kreisfrequenz Dwp < wp1/10 sein soll.

An Korrelator 1 kommt nun somit ein verändertes Zeitsignal an mit:

$$\underline{S}_1(t) = C(t-\Delta t) \cdot (\underline{A}_1(t) + \underline{A}_2(t) \cdot e^{(j \, \omega p2 \, t)})$$

Während an Korrelator 2 das folgende Zeitsignal ankommt:

$$\underline{S}_2(t) = C(t-\Delta t) \cdot (\underline{A}_1(t) \cdot e^{(-j \, \omega p2 \, t)} + \underline{A}_2(t) \cdot e^{(j \, \Delta\omega p \, t)})$$

An den Korrelatoren 1 und 2 wird nun das dort gespeicherte Codesignal C(t) mit den jeweils dort eingespeisten Signalen S1 und S2 multipliziert und über die Codedauer T integriert.

In Korrelator 1 entsteht die Korrelationsfunktion:

$$\underline{K}_1(t,\tau) = \int\limits_{t-T/2}^{t+T/2} \left( C(t-\tau) \cdot C(t-\Delta t) \cdot ((\underline{A}_1(t) + \underline{A}_2(t) \cdot e^{(j\omega_{p1}t)})) \right) dt$$

In Korrelator 2 entsteht die Korrelationsfunktion:

$$\underline{K}_2(t,\tau) = \int\limits_{t-T/2}^{t+T/2} \left( C(t-\tau) \cdot C(t-\Delta t) \cdot \left( \underline{A}_1(t) \cdot e^{(-j\omega_{p2}t)} + \underline{A}_2(t) \cdot e^{(j\Delta\omega_p t)} \right) \right) dt$$

Dabei wird der Empfangsseitig gespeicherte Code um die Zeitverzögerung $\tau$ solange verschoben, bis sich für beide ein Korrelationsmaximum einstellt. Damit ist nun der gespeicherte Code synchron mit dem empfangenen Code, sodass $\tau = \Delta t$ gilt:

Damit folgt, dass in diesem Zustand, also nach dem Finden des Korrelationsmaximums, jeweils das anliegende Signal mit C(t- $\Delta t$) multipliziert und anschließend über die Codedauer T integriert wird.

Durch Multiplikation aller in die Korrelatoren eingespeisten Signale S1 und S2 mit C(t- $\Delta t$) entstehen in allen Summanden die Codebedingten Faktoren (C(t-$\Delta t$))$^2$. Diese haben immer den Wert +1 und haben daher keinen weiteren Einfluss. Nach dieser Multiplikation wird in den Korrelatoren das Integral über die Codedauer T=1 ms durchgeführt.

Sei nun A1 und A2 annähernd konstant über die Dauer 1ms (bei kleinen Dopplerfrequenzen rotieren A1 und A2 langsam)).

Dann ergibt sich für Korrelation 1:

$$\underline{K}_{1max}(t) \approx \left( \underline{A}_1(t) + \underline{A}_2(t) \cdot e^{(j\omega_{p1}t)} \cdot \text{Si}\left(\frac{\omega_{p1}T}{2}\right) \right) \cdot T$$

Analog ergibt sich für Korrelation 2:

$$\underline{K}_{2max}(t) \approx \left( \underline{A}_1(t) \cdot e^{(-j\omega_{p2}t)} \cdot \text{Si}\left(\frac{\omega_{p2}T}{2}\right) + \underline{A}_2(t) \cdot e^{(j\Delta\omega_p t)} \cdot \text{Si}\left(\frac{\Delta\omega_p T}{2}\right) \right) \cdot T$$

Ziel der vorliegenden Erfindung ist es nun, im Korrelationsmaximum K1max(t) des ersten Korrelattors ausschließlich Signalinhalte der ersten Empfangsantenne, also ausschließlich A1(t) und im Korrelationsmaximum K2max(t) ausschließlich Signalinhalte der zweiten Empfangsantenne, also $\underline{A}_2$(t) zu erhalten.

Erfindungsgemäß wird dies durch Wahl der Argumente der von der Zeit unabhängigen Funktionen

$\text{Si}\left(\frac{\omega_{p1}T}{2}\right)$, $\text{Si}\left(\frac{\omega_{p2}T}{2}\right)$ und $\text{Si}\left(\frac{\Delta\omega_p T}{2}\right)$ mit der Aufgabe , dass $\text{Si}\left(\frac{\omega_{p1}T}{2}\right)$ und $\text{Si}\left(\frac{\omega_{p2}T}{2}\right)$ möglichst

verschwinden und $\text{Si}\left(\frac{\Delta\omega_p T}{2}\right)$ möglichst zu 1 wird.

Dies wird im Idealfall dadurch erreicht, dass die Vor - und Rückverschiebung der Phase gleich sind, sodass $\phi$b(t) - $\phi$b'(t) = 0 gilt, mit:

$\omega_{p1}t = \omega_{p2}t$ und
$\omega_{p1}t - \omega_{p2}t = \Delta\omega_p t = 0$.

Damit gilt : $\text{Si}\left(\frac{\omega_{p1}T}{2}\right) = \text{Si}\left(\frac{\omega_{p2}T}{2}\right) = 0$ für $\frac{\omega_{p1}T}{2} = m*\pi$ mit m = 1, 2, 3,... Daraus folgt unmittelbar: $\omega_{p1} = \omega_{p2} = $ m*$2\pi$/T und für die Phasenverschiebung $\phi$b(t) = - $\phi$b'(t) = $\omega_{p1}$*t = m*$2\pi$*t/T.

Zusätzlich gilt : $\text{Si}\left(\frac{\Delta\omega_p T}{2}\right) = 1$ für $\frac{\Delta\omega_p T}{2} = 0$ und ist wegen $\Delta\omega_p = 0$ gegeben.

Die erfindungsgemäße Forderung der m-fach periodischen Phasenverschiebung von 0 bis $2\pi$ innerhalb der Zeit t = T führt somit für alle m = 1, 2, 3 im Idealfall zur vollkommenen Trennung der Signalwirkungen der Antennen 1 und 2 am Ausgang der Korrelatoren.

Eine weitere Auswertung der Si- Funkionen zeigt für den praktischen Fall der Abweichung der Phasenrück- von der Phasenvorverschiebung um < 10 %, (d. h. $\phi$b(t) - $\phi$b'(t) = $\Delta\omega_p$*t= ($\omega_{p1}$ - $\omega_{p2}$)*t < $\omega_{p1}$*t/10) einen mindestens um 30db gedämpften und somit praktisch tolerierbaren Beitrag des jeweils unerwünschten Signals.

**Liste der Bezeichnungen**

Satellitennavigations-Empfangsanlage 1
GNSS-Satellitensignal-Empfangseinheit 2
Mehrantennensystem 3
Erste Satelliten-Empfangsantenne 3a
weitere Satelliten-Empfangsantenne 3b
Linearkombinationsschaltung $4_1$, $4_2$, $4_3$, ...
GNSS-Satelliten-Signale $5_1$, $5_2$, $5_3$, ...
erste GNSS-Satelliten-Antennensignale 5a, $5a_1$, $5a_2$, $5a_3$, ...
weitere GNSS-Satelliten-Antennensignale 5b, $5b_1$, $5b_2$, $5b_3$, ...
Um die Phasenveränderung $\phi b(t)$, $\phi c(t)$ verschobenes weiteres GNSS-Satelliten-Antennensignal (5b, 5c, ...) 5b'
leitende Grundfläche 6
erster CDMA-Code-Signal-Korrelator $10a_1$, $10a_2$, $10a_3$, ...
weiterer CDMA-Code-Signal-Korrelator $10b_1$, $10b_2$, $10b_3$....
zweiter weiterer CDMA-Code-Signal-Korrelator $10c_1$, $10c_2$, $10c_3$....
erstes komplexes Basisband-Signal 11a, $11a_1$, $11a_2$, $11a_3$, ...
weiteres komplexes Basisband-Signal 11b, $11b_1$, $11b_2$, $11b_3$,...
komplexes Basisband -Summensignal 11s
komplexes Basisband -Summensignal 11s'
Um die Phasenveränderung $-\phi b(t)$, $-\phi c(t)$ verschobenes digitales komplexes Basisband-Summensignal (11s) 11s'
erstes komplexes Korrelationssignal $12a_1$, $12a_2$, $12a_3$, ...
weiteres komplexes Korrelationssignal $12b_1$, $12b_2$, $12b_3$,
erster Kohärenz-Quadratur-Demodulator 13a
weiterer Kohärenz-Quadratur-Demodulator 13b
Steuerlogik 14, $14_1$, $14_2$, $14_3$, ...
Monopolantenne 0-ter Ordnung 15
Summationsglied $16_1$, $16_2$, $16_3$, ...
Trägerschwingung der Frequenz fo 17
Signalprozessor 18
vertikale Strahler 19a, 19b, 19b, 19c
Ringleitungsantenne 2. Ordnung 20
Ringleitungsantenne 1. Ordnung 21
vertikale Strahlern 22a,...22h
steuerbarer Umschalter 23a, 23b
Patchantenne 24
wahlschaltbarer Codes-Generator 25
erster rechnerischer komplexer Multiplikator $\underline{F}_{1a}$, $\underline{F}_{2a}$, $\underline{F}_{3a}$, $26a_1$, $26a_1$, $26a_2$, $26a_3$,
Weiterer Rechnerischer komplexer Multiplikator $\underline{F}_{1b}$, $\underline{F}_{2b}$, $\underline{F}_{3b}$, $26b_1$, $26b_2$, $26b_3$,.
Zweiter weiterer Rechnerischer komplexer Multiplikator $\underline{F}_{1c}$, $\underline{F}_{2c}$, $\underline{F}_{3c}$, $26c_1$, $26c_2$, $26c_3$,.
linear kombiniertes Gesamtsignal $Kg_1$, $Kg_2$, ..., $27_1$, $27_2$, $27_3$
Bandpassfilter 28
Verstärker 29
In-Phase-Komponente 30
Quadratur-Komponente 31
GNSS-HF-Frontend 32a, 32b, 32c
Digitale Recheneinheit $33_1$, $33_2$, $33_2$, ...
Erster Korrelationssignal-Maximalwert $34a_2$, $34a_3$, ...
weiterer Korrelationssignal-Maximalwert $34b_1$, $34b_2$, $34c_3$,...
Ringleitung 35
Komplexe Ebene 36
Satellitenspezifischer Code-Generator mit Code $C_1$, $C_2$, $C_3$, ... $37_1$, $37_2$, $37_3$, ...
Einstellbares Laufzeitglied mit Laufzeit $\tau$ 38
A/D-Wandler 39
Phasenwinkeldifferenz $\delta_{a1}$ - $\delta_{b1,}$ : 45
Phasenunterschied d. Antennensignalanteile eines Satelliten 45

Variables Phasendrehglied 100

Ansteuereinheit 101

Leistungskombinationsschaltung 102

Komplexe Phasenkorrektureinheit 103

Elektrische Leitung 104

Oszillatorsignal 105

GNSS-Satelliten-Antennen-Summensignale 5s

Digitale GNSS-Satelliten-Antennen-Summensignale im Basisband 11s

Satelliten: $Sat_1$, $Sat_2$, $Sat_3$, ...

Träger-Frequenz fo

Frequenzversatz $\Delta$fb

GNSS-Ortungs- Satelliten: Sat1, Sat2, Sat3,...

Realteil Re

Imaginärteil Im

CDMA-Code $C_1$, $C_2$, $C_3$, ...

HF-Träger-Frequenz fo

Phasenwinkel der Antennenstrahlung ß = 0 - $2\pi$*N vs. Azimut dynamische Phasenwinkelverschiebung $\Phi(t)$

Ganzzahlige Ordnung N

Phase des ersten Antennensignals $\theta_{a1}$, $\theta_{a2}$, $\theta_{a3}$, ..

Phase des weiteren Antennensignals $\theta_{b1}$, $\theta_{b2}$, $\theta_{b3}$, ... $\theta_{c1}$, $\theta_{b2}$, $\theta_{c3}$,

Azimutaler Winkel der Strahlung $\alpha$

Summensignal 5s

Korrelationsfunktion $Kt_1$, $Kt_2$, $Kt_3$ ...

Codedauer des GNSS-SystemsTC

Periodenzeit Tp der periodischen Phasenveränderungen $\phi b(t)$, $\phi c(t)$ ... für einen Umlauf zwischen 0 und $2\pi$

Ganzzahliges Vielfaches m = 1, 2, 3 ...

## Patentansprüche

1. Satellitennavigations-Empfangsanlage (1) zum mobilen Empfang der von s GNSS-Ortungssatelliten ($Sat_1$, $Sat_2$, $Sat_3$, ...) ausgestrahlten, ...) GNSS-Satelliten-Signalen ($5_1$, $5_2$, $5_3$, ...), die auf einer in der Phase digital modulierten HF-Trägerschwingung (17) auf derselben Träger-Frequenz fo überlagert ausgestrahlt werden, und die jeweils mit einem spezifischen CDMA-Code ($C_1$, $C_2$, ...) codiert sind, umfassend:

- eine zirkular polarisierte erste Satelliten-Empfangsantenne (3a) mit Strahlungshauptrichtung zum Zenit, an deren Ausgang ein erstes GNSS-Satelliten-Antennensignal (5a) anliegt, und
- mindestens eine weitere Satelliten-Empfangsantenne (3b), an deren Ausgang ein weiteres GNSS-Satelliten-Antennensignal (5b, 5c, ...) anliegt, und
- eine Satellitensignal-Empfangseinheit (2), umfassend:

- einen ersten auf die Träger-Frequenz fo bezogenen Kohärenz-Quadratur-Demodulator (13a), der mit der ersten Satelliten-Empfangsantenne (3a) verbunden ist, und der nach einer kohärenten Demodulation von s überlagerten GNSS-Satelliten-Antennensignalen ($5a_1$, $5a_2$, $5a_3$, ...) der ersten Satelliten-Empfangsantenne (3a) ein erstes digitales Basisband-Signal ($11a_1$, $11a_2$, $11a_3$, ...) ausgibt,
- für jede weitere Satelliten-Empfangsantenne (3b) einen weiteren auf fo bezogenen Kohärenz-Quadratur-Demodulator (13b, 13c, ...), der mit dieser verbunden ist, und der nach einer kohärenten Demodulation von s überlagerten weiteren GNSS-Satelliten-Antennensignalen ($5b_1$, $5b_2$, $5b_3$, ...) der weiteren Satelliten-Empfangsantenne (3b) ein weiteres digitales Basisband-Signal ($11b_1$, $11b_2$, ... $11c_1$,...) ausgibt,
- wobei für jedes der s GNSS-Satelliten-Signale ($5_1$, $5_2$, $5_3$, ...) ein erster, auf einen jeweils spezifischen CDMA-Code ($C_1$, $C_2$, ...) bezogener CDMA-Code-Signal-Korrelator ($10a_1$, $10a_2$, $10a_3$, ...) vorhanden ist, dem das erste digitale Basisband-Signal ($11a_1$, $11a_2$, $11a_3$,..) zugeführt ist,
- und für jedes der s GNSS-Satelliten-Signale ($5_1$, $5_2$, $5_3$, ...) mindestens ein auf jeweils denselben spezifischen CDMA-Code ($C_1$, $C_2$ ...) bezogener weiterer CDMA-Code-Signal-Korrelator ($10b_1$, $10b_2$, $10b_3$, ... $10c_1$, $10c_2$, $10c_3$, ...) vorhanden ist, dem das mindestens eine weitere digitale Basisband-Signal ($11b_1$, $11b_2$, $11b_3$,.. $11c_1$, $11c_2$, $11c_3$, ...) zugeführt ist,
- wobei für jedes der s GNSS-Satelliten-Signale ($5_1$, $5_2$, $5_3$, ...) jeder erste und jeder weitere CDMA-Code-Signal-Korrelator ($10a_1$, $10a_2$, $10a_3$, ..., $10b_1$, $10b_2$, $10b_3$, ...) an seinem Ausgang ein komplexes Korrela-

tionssignal ($12a_1$, $12a_2$, $12a_3$,..., $12b_1$, $12b_2$, ... $12c_1$,...) mit einem komplexen Korrelationssignal-Maximalwert ($34a_1$, $34a_2$, $34a_3$, ..., $34b_1$, $34b_2$, ...$34c_1$,...) in Form einer Inphasekomponente (I) und einer Quadraturkomponente (Q) ausgibt, und wobei

- für jedes der s GNSS-Satelliten-Signale ($5_1$, $5_2$, $5_3$, ...) eine Linearkombinationsschaltung ($4_1$, $4_2$, $4_3$, ...) vorhanden ist, welcher der komplexe Korrelationssignal-Maximalwert ($34a_1$, $34a_2$, $34a_3$,...) des ersten CDMA-Code-Signal-Korrelators ($10a_1$, $10a_2$, $10a_3$, ...) und der komplexe Korrelationssignal-Maximalwert ($34b_1$, $34b_2$,... $34c_1$,...) jedes weiteren CDMA-Code-Signal-Korrelators ($10b_1$, $10b_2$, $10b_3$, ...) zugeführt ist, und in der diese Maximalwerte rechnerisch in der Weise linear kombiniert sind, dass am Ausgang der Linearkombinationsschaltung ($4_1$, $4_2$, $4_3$, ...) ein im Signal-Störverhältnis verbessertes linear kombiniertes Signal ($Kg_1\tau$, ..., $27_1$, $27_2$, $27_3$) zur Auswertung von Navigationsdaten anliegt.

2. Satellitennavigations-Empfangsanlage (1) nach Anspruch 1,
   **dadurch gekennzeichnet, dass**
   die Maximalwerte rechnerisch in der Weise linear kombiniert sind, dass der Betrag des linear kombinierten Korrelationssignals ($27_1$, $27_2$, $27_3$, ...) größer ist als der Betrag jedes einzelnen komplexen Korrelationssignal-Maximalwerts ($34a_1$, $34a_2$, $34a_3$, ..., $34b_1$, $34b_2$, ... $34c_1$, ...).

3. Satellitennavigations-Empfangsanlage (1) nach Anspruch 1 oder 2,
   **dadurch gekennzeichnet, dass**
   zumindest einer der komplexen Korrelationssignal-Maximalwerte ($34a_1$, $34a_2$, $34a_3$, ..., $34b_1$, $34b_2$,... $34c_1$, ...) durch Multiplikation mit einem komplexen Faktor in der Phase in der Weise gedreht ist, dass die gleichphasige Summation im betreffenden Summationsglied ($16_1$, $16_2$, $16_3$, ...) gegeben ist.

4. Satellitennavigations-Empfangsanlage (1) nach einem der vorstehenden Ansprüche,
   **dadurch gekennzeichnet, dass**
   mindestens zwei rechtsdrehend zirkular polarisierte Satelliten-Empfangsantennen (3a, 3b) mit unterschiedlicher Position in der Horizontalen und einem Abstand in der Horizontalen von mehr als 1/4 der Freiraum-Wellenlänge der Träger-Frequenz fo für den gesonderten, jeweils überlagerten Empfang von mehreren GNSS-Satelliten-Signalen ($5_1$, $5_2$, $5_3$, ...) mit jeweils azimutalem Runddiagramm der Strahlungsdichte N = 1-ter Ordnung mit Strahlungshauptrichtung zum Zenit vorhanden sind.

5. Satellitennavigations-Empfangsanlage (1) nach einem der vorstehenden Ansprüche,
   **gekennzeichnet durch** die folgenden Merkmale:

   - die erste Satelliten-Empfangsantenne (3a) ist eine Ringleitungsantenne (21) mit N = 1-ter Ordnung mit rechtsdrehend zirkularer Polarisation (RHCP) und der Strahlungshauptrichtung zum Zenit, umfassend eine über der elektrisch leitenden Grundfläche (6) angeordnete Ringleitung (35) mit der Stromverteilung einer laufenden Leitungswelle in einer einzigen Umlaufrichtung, deren Phasenunterschied über einen Umlauf gerade $2\pi$ beträgt, mit vier mit der Ringleitung (35) verbundenen und azimutal um 90 Grad gegeneinander versetzten vertikalen Strahlern (19a,...19d) mit Abgriff des ersten Empfangssignals ($5a_1$, $5a_2$, $5a_3$, ...) an einem der vertikalen Strahler (19a) zur Übertragung an jeden der ersten CDMA-Code-Signal-Korrelatoren ($10a_1$, $10a_2$, $10a_3$, ...), von denen jeder auf den entsprechenden spezifischen CDMA-Code ($C_1$, $C_2$,...) bezogen ist,
   - die weitere Satelliten-Empfangsantenne (3b) ist eine zur Ringleitungsantenne (21) der N = 1-ten Ordnung konzentrisch angeordnete, vertikale Monopolantenne (15) mit N = 0-ter Ordnung zum Empfang des weiteren GNSS-Satelliten-Antennensignals ($5b_1$, $5b_2$, $5b_3$, ...) zur Übertragung an jeden der weiteren CDMA-Code-Signal-Korrelatoren ($10b_1$, $10b_2$,... $10c_1$, ...), von denen jeder auf den entsprechenden spezifischen CDMA-Code ($C_1$, $C_2$..) bezogenen ist, oder
   - die weitere Satellitenantenne (3b) ist eine Ringleitungsantenne 2-ter Ordnung (20) mit rechtsdrehend zirkularer Polarisation (RHCP) und der Strahlungshauptrichtung zum Zenit, umfassend eine über der elektrisch leitenden Grundfläche (6) angeordnete Ringleitung (35) mit N = 2-ter Ordnung mit der Stromverteilung einer laufenden Leitungswelle in einer einzigen Umlaufrichtung, deren Phasenunterschied über einen Umlauf gerade $4\pi$ beträgt, mit acht mit der Ringleitung (35) verbundenen und azimutal um 45 Grad gegeneinander versetzten weiteren vertikalen Strahlern (22a,...22h) mit Abgriff der weiteren GNSS-Satelliten-Antennensignale ($5b_1$, $5b_2$,... $5c_1$, ...) an einem ersten der vertikalen Strahler (22a) zur Übertragung an jeden der weiteren CDMA-Code-Signal-Korrelatoren ($10b_1$, $10b_2$, $10b_3$, ...), von denen jeder auf den entsprechenden spezifischen CDMA-Code ($C_1$, $C_2$..) bezogen ist. (Fig. 6 oder7)

6. Satellitennavigations-Empfangsanlage (1) nach Anspruch 5,

**dadurch gekennzeichnet, dass**

anstelle der Ringleitungsantenne (21) der N = 1-ter Ordnung als erste Satellitenantenne (3a) im Zentrum der weiteren Satellitenantenne (3b) eine Patchantenne (24) mit N = 1-ter Ordnung vorhanden ist, mit rechtsdrehend zirkularer Polarisation (RHCP) und einer Verteilung des Phasenwinkels der Strahlung von $\beta = 0 - 2\pi$ über dem azimutalen Raumwinkel $\alpha = 0 - 2\pi$ und der Strahlungshauptrichtung zum Zenit. (Fig.8)

7. Satellitennavigations-Empfangsanlage (1) nach einem der vorstehenden Ansprüche,
**gekennzeichnet durch**

- eine zweite weitere Satelliten-Empfangsantenne (3c) für den Empfang der GNSS-Satelliten-Signale ($5_1$, $5_2$, $5_3$, ...) zur weiteren Quadraturdemodulation und Bildung eines zweiten weiteren digitalen Basisband-Signals ($11c_1$, $11bc_2$,...),
- zweite weitere CDMA-Code-Signal-Korrelatoren ($10c_1$, $10c_2$, $10c_3$, ...), von denen jeder auf den entsprechenden spezifischen CDMA-Code ($C_1$, $C_2$..) bezogen ist, und welchen jeweils das zweite weitere digitale Basisband-Signal ($11c_1$, $11c_2$, ...) zugeführt ist, wobei
- der zweite weitere komplexe Korrelationssignal-Maximalwert ($34c_1$, $34c_2$, $34c_3$,...) jeweils am Ausgang eines der zweiten weiteren CDMA-Code-Signal-Korrelatoren ($10c_1$, $10c_2$, $10c_3$, ...) der betreffenden Linearkombinationsschaltung ($4_1$, $4_2$, $4_3$,..) zugeführt ist und rechnerisch im Summationsglied ($16_1$, $16_2$, $16_3$, ...) mit den übrigen Signalen kombiniert ist. (Fig. 10)

8. Satellitennavigations-Empfangsanlage (1) nach einem der Ansprüche 5 oder 6,
**dadurch gekennzeichnet, dass**
als eine zweite weitere Satelliten-Empfangsantenne (3c), eine zu einer im Zentrum befindlichen Ringleitungsantenne (21) mit N = 1-ter Ordnung und der Monopolantenne (15) mit N=0ter Ordnung eine ebenfalls konzentrisch angeordnete Ringleitungsantenne (20) mit N = 2-ter Ordnung zum Empfang eines dritten Empfangssignals (5c) vorhanden ist. (Fig.9)

9. Satellitennavigations-Empfangsanlage (1) nach einem der vorstehenden Ansprüche,
**dadurch gekennzeichnet, dass**

die Satelliten-Empfangsantennen (3a, 3b, 3c, ...) auf einer im wesentlichen horizontalen Außenhaut eines Fahrzeugs angebracht sind, und dass in der Linearkombinationsschaltung ($4_1$, $4_2$, $4_3$, ...) jeweils eine Steuerlogik ($14_1$, $14_2$, $14_3$, ...) vorhanden ist, in welcher diskrete komplexe Linearkombinationswerte zur Einstellung der komplexen Multiplikatoren ($26a_1$, $26a_2$, ... $26b_1$, $26b_2$, ... $26c_1$,...) zur Nachbildung diskreter Hauptrichtungen des Strahlungsdiagramms über den gesamten oberen Halbraum für verschiedene diskrete azimutale Ausrichtungen des Fahrzeugs über den gesamten Azimut abgelegt sind, und dass
in der Steuerlogik ($14_1$, $14_2$, $14_3$, ...) die Ortsdaten der Satelliten ($Sat_1$, $Sat_2$, $Sat_3$, ...) abgelegt sind und somit - bezogen auf die Fahrzeugausrichtung - die Einfallsrichtung ermittelt ist, aus der GNSS-Satelliten-Signalen ($5_1$, $5_2$, $5_3$, ...) in einer Sichtlinie zum Satelliten (Line of Sight Signale) einfallen, und
in der Linearkombinationsschaltung ($4_1$, $4_2$, $4_3$, ...) die aktuelle Einstellung der Linearkombination für die sich aus der Einfallsraumrichtung des betreffenden Satelliten ($Sat_1$, $Sat_2$, $Sat_3$, ...) und der Fahrzeugausrichtung ergebende Hauptstrahlungsrichtung gewählt ist.

10. Satellitennavigations-Empfangsanlage (1) nach einem der vorstehenden Ansprüche,
**dadurch gekennzeichnet, dass**
zur Einsparung von Leitungsverbindungen und weiterer IQ-Demodulatoren (13b, 13c, ...) nur der erste Kohärenz-Quadratur-Demodulator (13a) vorhanden ist, und stattdessen:

- jede weitere Satelliten-Empfangsantenne (3b, 3c, ...) mit einem variablen Phasendrehglied (100) verbunden ist, das die Trägerphase für jede der weiteren Antennen (3b, 3c, ...) in unterschiedlicher Form zeitlich verändert,
- das GNSS-Satelliten-Antennensignal (5a) der ersten Satelliten-Empfangsantenne (3a) und der Ausgang jedes Phasendrehgliedes (100) über eine Kombinationsschaltung (102) zur Bildung eines Summensignals (5s) miteinander überlagert sind,
- das Summensignal (5s) nur über eine einzige Leitungsverbindung und den ersten Kohärenz-Quadratur-Demodulator (13a) als digitales komplexes Basisbandsignal (11s) allen ersten CDMA-Code-Signal-Korrelatoren ($10a_1$, $10a_2$, $10a_3$, ...) zugeführt wird, und
- für jede der weiteren Antennen (3b, 3c, ...) eine Phasenkorrektureinheit (103, 103b, ...) vorhanden ist, welcher das digitale komplexe Basisband-Summensignal (11s) zugeführt ist und welche konfiguriert ist, durch rechnerische komplexe Multiplikation des komplexen digitalen Basisbandsignals (11s) mit einer komplexen Phasenkorrektur (103) die zuvor über das Phasendrehglied (100) erfolgte Phasendrehung wieder rückgängig zu machen, wodurch

- ein in der Phase korrigiertes digitales Basisband-Signal ($11b_1$, $11b_2$, ... $11c_1$, ...) den weiteren CDMA-Code-Signal-Korrelatoren ($10b_1$, $10b_2$, ... $10c_1$, $10c_2$...) zugeführt ist.

11. Satellitennavigations-Empfangsanlage (1) nach Anspruch 10,
   **dadurch gekennzeichnet, dass**
   der zeitliche Verlauf der Phasenveränderungen ($\phi b(t)$, $\phi c(t)$) periodisch und insbesondere linear mit der Zeit derart über einen Umlauf von 0 bis $2\pi$ erfolgt, dass dessen Periodenzeit ein einfaches oder ein mehrfaches ganzzahliges Vielfaches der Codedauer des CDMA - Codes ($C_1$, $C_2$, $C_3$) beträgt.

12. Satellitennavigations-Empfangsanlage (1) nach Anspruch 10 oder 11,
   **dadurch gekennzeichnet, dass**
   eine Ansteuereinheit (101) vorhanden ist, durch welche das Phasendrehglied (100) in der Weise angesteuert ist, dass der zeitliche Verlauf der Phasenveränderungen $\phi b(t)$, die Form einer Sägezahn-Funktion mit einem Umlauf von 0 bis $2\Pi$ erfolgt, deren Periodenzeit ein einfaches oder ein mehrfaches ganzzahliges Vielfaches der Codedauer des CDMA - Codes (C1, C2, C3) beträgt, wobei insbesondere im Falle des Vorhandenseins mehrerer weiterer Satelliten-Empfangsantennen (3b, 3c) die den weiteren Satelliten-Empfangsantennen nachgeschalteten Phasendrehglieder (100) in der Weise gesteuert sind, dass die Periodenzeiten ihrer Sägezahn-Funktionen jeweils in einem ganzzahligen Verhältnis, jedoch ungleich der Zahl 1, zueinander stehen. (Fig.11 und 12)

13. Satellitennavigations-Empfangsanlage (1) nach Anspruch 10, 11 oder 12,
   **dadurch gekennzeichnet, dass**
   das variable Phasendrehglied (100) in Form eines Frequenzmischers ausgestaltet ist und eine Ansteuereinheit (101) in Form eines Oszillators vorhanden ist, sodass der Umlauf des Phasenwinkels $\phi b(t)$ des Mischprodukts von 0 bis $2\pi$ in Form einer Frequenzverschiebung der Satelliten-Antennensignale ($5s1$, $5s2$, $5s3$, ...) der weiteren Satelliten-Empfangsantennen (3b, 3c) erfolgt, deren Periode ein ganzzahliger Teiler einer Codedauer des GNSS-Systems ist, wobei die Frequenzverschiebungen der weiteren Satelliten-Empfangsantennen (3b, 3c) zueinander ein ganzzahliges Vielfaches sind.

14. Verfahren zur Verbesserung der Ortungsergebnisse einer GNSS-Satellitennavigations-Empfangsanlage (1) zum mobilen Empfang von GNSS-Ortungssatelliten ($Sat_1$, $Sat_2$, $Sat_3$, ...) mit jeweils einem satellitenspezifischen CDMA-Code ($C_1$, $C_2$, $C_3$, ...) kodiert ausgestrahlten GNSS-Satelliten-Signal ($5_1$, $5_2$, $5_3$, ...), wobei:

   - mit einer ersten Satelliten-Empfangsantenne (3a) zum überlagerten Empfang der GNSS-Satelliten-Signale ($5_1$, $5_2$, $5_3$, ...), deren GNSS-Satelliten-Antennensignal (5a) in ein erstes komplexes Basisband-Signal (11a) umgesetzt wird,
   - eine Reihe von ersten CDMA-Code-Signal-Korrelatoren ($10a_1$, $10a_2$, $10a_3$, ...) vorhanden ist, von denen jeder jeweils mit einem satellitenspezifischen CDMA-Code ($C_1$, $C_2$, $C_3$, ...) angesteuert wird und denen gemeinschaftlich das erste komplexe Basisband-Signal (11a) zugeführt wird und anhand der Korrelation mit dem jeweils satellitenspezifischen CDMA-Code ($C_1$, $C_2$, $C_3$, ...) ein satellitenspezifischer erster komplexer Korrelationssignal-Maximalwert ($34a_1$, $34a_2$, ...) ermittelt wird,
   - mindestens eine weitere Satelliten-Empfangsantenne (3b, 3c, ...) verwendet wird, deren weiteres antennenspezifisches GNSS-Satelliten-Antennensignal (5b, 5c, ...) jeweils in ein weiteres antennenspezifisches komplexes Basisband-Signal (11b, 11c, ...) umgesetzt wird,
   - zu jedem der ersten CDMA-Code-Signal-Korrelatoren ($10a_1$, $10a_2$, $10a_3$, ...) jeweils mindestens ein diesem gleicher weiterer CDMA-Code-Signal-Korrelator ($10b_1$, $10b_2$, ...,$10c_1$, $10c_2$, ...) - angesteuert mit dem gleichen satellitenspezifischen CDMA-Code ($C_1$, $C_2$, $C_3$, ...) - verwendet wird, dem jeweils das weitere antennenspezifische komplexe Basisband-Signal (11b, 11c, ...) zugeführt wird,
   - anhand der Korrelation für jedes der vorhandenen antennenspezifischen weiteren komplexen Basisband-Signale (11b, 11c, ...) mit dem jeweils satellitenspezifischen CDMA-Code ($C_1$, $C_2$, $C_3$, ...) ein satellitenspezifischer weiterer komplexer Korrelationssignal-Maximalwert ($34b_1$, $34b_2$,..., $34c_1$, $34c_2$,...) ermittelt wird, und
   - jeweils die mit dem gleichen satellitenspezifischen CDMA-Code ($C_1$, $C_2$, $C_3$, ...) gewonnenen satellitenspezifischen ersten und weiteren komplexen Korrelationssignal-Maximalwerte ($34a_1$, $34a_2$,..., $34b_1$, $34b_2$,..., $34c_1$, $34c_2$,...) einer satellitenspezifischen Linearkombinationsschaltung ($4_1$, $4_2$, $4_3$, ...) gesondert zugeführt werden, in welcher diese satellitenspezifischen Korrelationssignal-Maximalwerte rechnerisch in der Weise linear kombiniert werden, dass am Ausgang der Linearkombinationsschaltung ($4_1$, $4_2$, $4_3$, ...) ein im Signal-Störverhältnis verbessertes linear kombiniertes Signal ($Kg_1\tau$, ..., $27_1$, $27_2$, $27_3$) anliegt.

15. Verfahren nach Anspruch 14,
    wobei abweichend von Anspruch 14:

    - jedes der weiteren GNSS-Satelliten-Antennensignale (5b, 5c, ..) in unterschiedlicher Form durch eine antennenspezifische periodische Phasenverschiebung $\phi b(t)$, $\phi c(t)$ über einen Umlauf von 0 bis $2\pi$ verändert wird, deren Periodenzeit Tp in einem ganzzahligen Vielfachen mehrmals während einer Codedauer TC des CDMA - Codes ($C_1$, $C_2$, $C_3$) des GNSS-Systems abläuft (d.h. Tp = TC/m und m = 1, 2, 3, ...) gewählt wird,
    - die in der Phase verschobenen weiteren GNSS-Satelliten-Antennensignale (5b, 5c, ..) mit dem ersten GNSS-Satelliten-Antennensignal (5a) in einer Leistungskombinationsschaltung (102) zum Summensignal (5s) zusammengefasst werden und dieses anschließend in das komplexe Basisband -Summensignal (11s) umgesetzt wird;
    - das komplexe Basisband -Summensignal (11s) gemeinschaftlich allen ersten CDMA-Code-Signal-Korrelatoren ($10a_1$, $10a_2$, $10a_3$, ...) zugeführt wird;
    - das digitale komplexe Basisband-Summensignal (11s) zusätzlich durch rechnerische komplexe Multiplikation in einer antennenspezifischen Phasenkorrektureinheit (103b, 103c, ...) um die gleich große jedoch negative antennenspezifische Phasenveränderung - $\phi b(t)$, - $\phi c(t)$, zurückverschoben wird und somit jeweils ein antennenspezifisch zurückverschobenes komplexes Basisband-Summensignal (11sb, 11sc,...) gebildet wird; und
    - das antennenspezifische weitere komplexe Basisband-Summensignal (11sb, 11sc,...) jeweils allen antennenspezifischen weiteren CDMA-Code-Signal-Korrelatoren ($10b_1$, $10b_2$, ... $10c_1$, $10c_2$,) gemeinschaftlich zugeführt wird.

Fig: 1

Fig: 2

Fig: 3

Fig: 4

Fig: 5

Fig: 6

Fig: 7

Fig: 8

EP 4 498 128 A2

Fig: 9

EP 4 498 128 A2

Fig: 10

Fig: 11

Fig: 12

EP 4 498 128 A2

Fig: 13

Fig: 14

Fig: 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009040910 A
- DE 4008505 A
- DE 10163793 A